# EUROPEAN PATENT APPLICATION

(11) **EP 1 707 538 A1**
(43) Date of publication of application: **04.10.2006**
(21) Application number: 05703889.5
(22) Date of filing: 20.01.2005
(51) Int. Cl.: C02F 1/28, C02F 1/44, C02F 1/52, C02F 1/72, B01D 61/02, B01D 61/14, B01D 61/16

(54) **METHOD FOR TREATING RAW WATER CONTAINING HARDLY DECOMPOSABLE SUBSTANCE**

(30) Priority: 22.01.2004 JP 2004013848; 14.01.2005 JP 2005007274
(71) Applicant: IDEMITSU KOSAN CO., LTD., Tokyo 100-8321 (JP); Daicen Membrane-Systems Ltd., Osaka 590-0905 (JP)
(72) Inventor: MURAMOTO, Takahisa, Sodegaura-shi, Chiba 2990293 (JP); YOSHIOKA, Yoshiyuki, Sodegaura-shi, Chiba 2990293 (JP); MORIMITSU, Kozo, Sodegaura-shi, Chiba 2990293 (JP); MACHIDA, Masashi, Sodegaura-shi, Chiba 2990293 (JP); OGOSHI, Shingo, Chiyoda-ku, Tokyo 1008321 (JP); NISHII, Masahiro, Ichihara-shi, Chiba 2990111 (JP); MIYAZAKI, Yasumitsu, Shinjuku-ku, Tokyo 1600022 (JP); KAMEDA, Shigeru, Osaka-shi, Osaka 5450053 (JP)
(74) Representative: Gille Hrabal Struck Neidlein Prop Roos
(86) International application number: PCT/JP2005/000661
(87) International publication number: WO 2005/070833

(57) **Abstract**

Provided a method for treating hardly-decomposable-substance-containing water, in which hardly decomposable substances such as dioxins, contained in contaminated water (treatment raw water) are concentrated and rendered harmless by providing the steps of (B) adding an adsorbent to water containing a hardly decomposable substance (treatment raw water) to cause the hardly decomposable substance to be adsorbed on the adsorbent (adsorption treatment step), (C) separating a permeated liquid through a filter membrane to concentrate the adsorbent adsorbing the hardly decomposable substance (membrane filtering treatment step), and (D) chemically decomposing the hardly decomposable substance adsorbed on the concentrated adsorbent with a peroxide without any operation of desorption from the adsorbent (chemical decomposition step), and the method can be applied to water containing a reducing substance such as bisulfate that neutralize free chlorine and can render the hardly decomposable substances harmless efficiently at a low cost without being limited by properties of the hardly decomposable substances contained.

## Description

### Field of the Invention

This invention relates to a method for treating raw water containing hardly decomposable substances such as dioxins and other endocrine-disrupting substances.

### Technical Background

In Japan a special measure law for countermeasures against dioxins has been instituted since the year of 1999 and the special law for countermeasures against dioxins stipulates that the emission standard of dioxins shall be 10 pg-TEG/L or less. On the other hand, there are some cases where incinerator demolish work effluent, industrial drainage from particular facilities, some soil extract water, etc., contain dioxins of high concentrations that greatly exceed the above standard, so that it is strongly desired to develop their reduction treatment techniques or removal techniques.

Further, endocrine disrupting substances (so-called environmental endocrine disruptors or endocrine disrupting chemicals) such as bisphenols, other than dioxins various organic chlorine compounds typified by trichloroethane, etc., are also hardly decomposable substances, and their emission standards have been also provided. Like the above dioxins, it is also strongly desired to develop their reduction treatment techniques or removal techniques.

As a method for separating and removing these hardly decomposable substances from discharge water containing these hardly decomposable substances (contaminated water), for example, for removing dioxins, there is employed a method in which discharge water is directly subjected to chemical decomposition of dioxin by ozone, photodegradation or hydrogen peroxide, decomposition with microorganisms or separation/removal using an adsorbent or a flocculating agent. However, these separating and removing techniques are inefficient and require large equipment investments since a liquid containing such hardly decomposable substances in very low concentration has to be directly treated. Further, when discharge water is contaminated at high levels, there are some cases where the emission standard cannot be fulfilled, so that the above techniques cannot be said to be desirable.

As a method for rendering these hardly decomposable organic compounds harmless, for example, for removing dioxins, there is known a method in which the dioxins are subjected to chemical decomposition by ozone, photodegradation and hydrogen peroxide, decomposition with microorganisms or separation/removal using an adsorbent or a flocculating agent. Of these, there is employed a treatment in which an oxidizing agent is added to dioxins to chemically decompose them for rendering them harmless since the treatment operation is simple. Further, concerning the oxidizing agent for chemical decomposition of dioxins, for example, there has been provided a technique using a persulfate (e.g., JP-A-2003-93999 and JP-A-2003-285043).

On the other hand, there is reported a technique for drainage treatment method comprising the steps of subjecting contaminated water to settling treatment, filtering it with a net having an average pore diameter of 10 to 100 µm, exposing a filtrate to ultraviolet light in the presence of a photocatalyst to carry out catalytic cracking and then treating it with an ultrafilter membrane (e.g., JP-A-2003-144857).
There is also proposed a treatment method in which discharged water is separation-treated with a reverse osmosis membrane (RO membrane) and a concentrated liquid is introduced into an oxidizing step of chemically decomposing it with active oxygen (e.g., JP-A-H11-347591 and JP-A-2000-354894).

Further, as a technique for preventing the discharge of a hardly decomposable substance, for example, physical methods, chemical methods and biological methods are known. The physical methods include an adsorption method, and there have been developed an adsorption method in which activated carbon is introduced into water (for example, see "Countermeasure techniques against dioxins" under the editorship of Naomichi HIRAYAMA, issued by CMC, pages 197-205 (1998)) and a method in which activated carbon is introduced into discharge gas. In this case, however, activated carbon that has once adsorbed a hardly decomposable substance still internally holds the hardly decomposable substance, and it cannot be discarded as it is.

The activated carbon used for the above adsorption is disposed of by the method of incineration, thermal decomposition or landfill. However, this method involves the risk of an adsorbate being discharged together with a discharge gas to cause secondary pollution, or seeping out from reclaimed land to cause re-contamination. There is hence desired a safe and economical treatment method.

As a method for decomposing a hardly decomposable substance in discharge water, soil or sludge containing the hardly decomposable substance, there is a thermal decomposition method, a chemical decomposition method using an alkali, a method using a supercritical liquid, a method using a combination of ozone, a peroxide such as hydrogen peroxide or hydrochlorite with ultraviolet light. Further, biological methods using white-rot fungi or enzymes produced by microorganisms are also being studied.

These methods have distinctions each, and some can easily apply, but others cannot easily apply, depending upon the state of existence of a hardly decomposable substance. For example, a thermal decomposition method and a supercritical water decomposition method require expensive facilities and energy, and there are many cases where they cannot economically be utilized. Further, a method using a combination of ozone or hydrogen peroxide with ultraviolet light cannot be applied to a suspension that does not easily transmit ultraviolet light or a solid such as soil or sludge. Therefore, discharge water containing a suspended substance or a wafting substance is treated after the suspended substance or wafting substance is once removed by filtering or settling for its separation. A hardly decomposable substance adsorbed on the suspended substance or wafting substance needs to be rendered harmless separately.

With regard to discharge water, further, there are proposed a chemical decomposition method using a combination of hydrogen peroxide with an iron salt and a chemical decomposition method using persulfate or permanganate.
For example, JP-A-2000-189945 discloses a treatment method that can remove an endocrine disrupting chemical with a simple device and an operation for a short period of time, so that the concentration thereof is reduced to a low level. In this method, an endocrine disrupting chemical in water is adsorbed on an activated carbon, or the like, it is concentrated by desorption thereof, and a peroxide such as persulfate or the like is brought into contact with the resultant concentrated liquid to carry out decomposition.
In general, harmful substances such as an endocrine disrupting chemical cause a problem that as the handling thereof becomes complicated, the possibility of them recontaminating a human body or an ambient environment is increased.

Therefore, if a hardly decomposable substance adsorbed on a solid can be decomposed as it is without eluting it, the operation therefor is simple and it is possible to avoid the risk of the recontamination of a human body or an ambient environment. Further, there are many industrial advantages in that an adsorbent used for separation of a hardly decomposable substance by decomposition can be reused, that a substance treated can be transported and that the method can be applied to solid contaminants of soil or sludge, so that it is desired to develop a technique therefor.

The treatment of discharge water containing a hardly decomposable substance will be further described in detail below.
As a source for generating discharge water containing a hardly decomposable substance, there are known chlorine-bleaching equipment in a kraft pulp production plant, equipment for the decomposition of disposed PCB or a substance resulting from the treatment of PCB, equipment for washing a PCB-contaminated substance or a substance resulting from the treatment of PCB, waste gas cleaning equipment of a melting furnace, etc., for the production of aluminum or aluminum alloy, wet-type dust collecting equipment, a waste pit that discharges wastewater, and the like.

Further, the Environmental Agency has amended the standard for water environment contaminants, and organic compounds such as trichloroethylene, tetrachloroethylene, PCB, etc., have been newly added to the environmental standard object substances that included heavy metals as main substances before that.

Conventionally, there has been developed a technique for removing a hardly decomposable substance as much as possible from treatment object water containing the hardly decomposable substance by means of a filter device, a membrane separation method, etc., and decomposing the hardly decomposable substance in the treatment water (for example, see JP-A-H11-99395).

For treating discharge water containing a hardly decomposable substance in the above manner, filtering treatment, biological treatment, etc., are carried out as pre-treatments, and ozone treatment, ultraviolet irradiation treatment, catalytic treatment or activated carbon treatment is carried out as a post treatment. It has been thus required to use a large amount of labor and a large amount of materials so far for the decomposition and removal.

Further, when ultraviolet irradiation treatment is taken as an example, it is a technique that can be applied only to a reaction system that can transmit ultraviolet light, and there is a problem that it cannot be applied to a solid-containing liquid and a solid. Further, a hardly decomposable substance removed by the pre-treatment needs to be separately rendered harmless for preventing secondary pollution.

It is therefore strongly desired to develop a technique for efficiently decomposing these hardly decomposable substances in a closed system free from recontamination of a human body and an ambient environment.

However, when a hardly decomposable organic compound is chemically decomposed by adding persulfate to such a hardly decomposable compound as disclosed in the above JP-A-2003-93999 and JP-A-2003-285043, the decomposition efficiency of the hardly decomposable organic compound is low, so that it has been very difficult to cope with a compound having a high concentration. On the other hand, there are some cases where such an organic compound having a high concentration is treated with persulfate to which a metal salt such as ruthenium salt is added. However, such a metal salt is very expensive and is not practical from the viewpoint of a cost.

In a technique disclosed in JP-A-2003-144857, when it is applied to discharge water in which the content of a solid in a decomposed substance is small, a layer that would be formed by settling of a solid in the decomposed substance is not formed on a metal mesh, and a dioxin-containing solid of fine particles of a decomposed substance or dissolved dioxin pass through the metal mesh, so that the treatment is sometimes insufficient.

In techniques disclosed in JP-A-H11-347591 and JP-A-2000-354894, when free chlorine is present in contaminated water, it is required to add an excess amount of a reducing substance such as bisulfite, or the like for neutralizing the free chlorine. This bisulfite or the like inhibits the chemical decomposition, so that it cannot be said that such a technique is an efficient means for separation and removal of a hardly decomposable substance.

It is an object of the invention to provide a method for treating hardly-decomposable-substance-containing water, which is for concentrating and rendering harmless hardly decomposable substances such as dioxins contained in contaminated water (treatment raw water) like incinerator demolish work effluent, industrial drainage from particular facilities, some soil extract water, etc., wherein the method can be applied to water containing a reducing substance such as bisulfite that neutralizes free chlorine and can efficiently render a contained hardly decomposable substance harmless without being limited by properties of the hardly decomposable substance at a low cost.

Under the circumstances, it is an object of this invention to provide a method for efficiently decomposing a hardly decomposable substance adsorbed on a solid as it is without carrying out the procedures of desorption, and a method for regenerating an adsorbent used for separating of a hardly decomposable substance by adsorption.

It is a second object of the invention to provide a method for treating discharge water, in which a hardly decomposable substance is separated from discharge water containing harmful hardly decomposable substance by deposition, the separated hardly decomposable substance is efficiently decomposed in a solid state and a closed system can be practiced.

It is a third object of the invention to provide a highly reliable discharge water treatment system, which combines various separation steps and decomposition steps and which can reliably fulfill the emission standard even when the concentration of a hardly decomposable substance in discharge water varies.

### [Disclosure of the Invention]

For achieving the above objects, the present inventors have made diligent studies and have found that the concentration of hardly decomposable substances such as dioxins in discharge water or waste substances can be reduced to a low level by combining a concentration technique based on membrane separation, a chemical decomposition technique and/or a photodegradation technique.
Further, it has been found that when treatment with a reverse osmosis membrane (RO membrane) or a nano-filter membrane (NF membrane) by which a salt can be concentrated and treatment with an ultrafilter membrane (UF membrane) through which a salt passes are combined, the osmotic pressure caused by in-process concentration of salts contained in filthy water, etc., can be stopped from increasing and a decrease in filtering capability can be suppressed.
It has been further found that the use, as a adsorbent, of titanium dioxide having high adsorption efficiency can increase the efficiency of chemical decomposition and that, since the titanium dioxide works as a photocatalyst and is hence used as a catalyst for photodegradation, the photodegradation is utilized in combination and there can be therefore provided a more reliable system for treating water containing a hardly decomposable substance. The present invention has been accordingly completed.

That is, according to a first aspect of this invention, the following methods for treating water containing a hardly decomposable substance are provided.
[1] A method for treating hardly-decomposable-substance-containing water, which comprises the steps of
   (B) adding an adsorbent to water containing a hardly decomposable substance (treatment raw water) to cause the hardly decomposable substance to be adsorbed on said adsorbent (adsorption treatment step),
   (C) separating a permeated liquid through a filter membrane to concentrate the adsorbent adsorbing said hardly decomposable substance (membrane filtering treatment step), and
   (D) chemically decomposing the hardly decomposable substance adsorbed on said concentrated adsorbent with a peroxide without any operation of desorption from said adsorbent (chemical decomposition step).
[2] A method for treating hardly-decomposable-substance-containing water as recited in the above [1], wherein the step (D) uses said peroxide in an amount of at least 100 times larger in molar relative to said hardly decomposable substance.
[3] A method for treating hardly-decomposable-substance-containing water as recited in the above [1] or [2], which further comprises the step of (A) separating a permeated liquid from the water containing the hardly decomposable substance through a reverse osmosis membrane (RO membrane) or a nano-filter membrane (NF membrane), to concentrate the hardly decomposable substance (membrane concentrating treatment step).
[4] A method for treating hardly-decomposable-substance-containing water as recited in the above [1], which further comprises the step of (E) neutralizing chlorine in the water containing the hardly decomposable substance (chlorine neutralization step).
[5] A method for treating hardly-decomposable-substance-containing water as recited in the above [1], which further comprises the step of (F) carrying out irradiation with ultraviolet light to decompose the hardly decomposable substance (photodegradation step).
[6] A method for treating hardly-decomposable-substance-containing water as recited in the above [1], which comprises the step of (G) backwashing the filter membrane used in said step (C), to free the adsorbent adsorbing the hardly decomposable substance from said filter membrane (backwash step).
[7] A method for treating hardly-decomposable-substance-containing water as recited in the above [1], which further comprises the step of (H) adding a flocculating agent to water containing the adsorbent adsorbing the hardly decomposable substance, to flocculate and separate the adsorbent adsorbing the hardly decomposable substance (flocculation-separation step).
[8] A method for treating hardly-decomposable-substance-containing water as recited in the above [1], wherein the adsorbent to be added in said step (B) is one inorganic adsorbent, or two or more inorganic adsorbents, selected from the group consisting of titanium dioxide, zeolite, acid clay, activated clay, diatomite, metal oxide, metal powder, activated carbon and carbon black.
[9] A method for treating hardly-decomposable-substance-containing water as recited in the above [8], wherein the adsorbent to be added in said step (B) is titanium dioxide.
[10] A method for treating hardly-decomposable-substance-containing water as recited in the above [1], wherein the filter membrane for use in said step (C) is selected from the group consisting of an ultrafilter membrane (UF membrane), a nano-filter membrane (NF membrane), a microfiltration membrane (MF membrane) and a reverse osmosis membrane (RO membrane).
[11] A method for treating hardly-decomposable-substance-containing water as recited in the above [1], wherein the peroxide for use in said step (D) is a persulfate.
[12] A method for treating hardly-decomposable-substance-containing water as recited in the above [1], wherein at least part of the hardly decomposable substance concentrated in said step (A) and/or the adsorbent adsorbing the hardly decomposable substance concentrated in said step (C) is returned to the water containing the hardly decomposable substance (treatment raw water) or a step upstream of the step (A) or the step (C).

According to a second aspect of this invention, there are provided apparatuses for treating hardly-decomposable-substance-containing water, which are for practicing the above embodiments according to the first aspect of this invention.
[13] An apparatus for treating hardly-decomposable-substance-containing water, which comprises
   an adsorbent adding section for adding an adsorbent to water containing a hardly decomposable substance (treatment raw water),
   a membrane filtering treatment section for separating a permeated liquid through a filter membrane to concentrate the adsorbent adsorbing said hardly decomposable substance, and
   a chemical decomposition treatment section for oxidation-decomposing said hardly decomposable substance adsorbed on said adsorbent with a peroxide.
[14] An apparatus for treating hardly-decomposable-substance-containing water, comprising
   a reducing substance introduction section for introducing a reducing substance to water containing a hardly decomposable substance (treatment raw water) to neutralize chlorine in said water,
   a membrane concentrating treatment section for separating a permeated liquid from the water containing a hardly decomposable substance through a reverse osmosis membrane (RO membrane) or a nano-filter membrane (NF membrane) to concentrate the hardly decomposable substance,
   an adsorbent adding section for adding an adsorbent to said hardly decomposable substance concentrated, to cause the adsorbent to adsorb the hardly decomposable substance,
   a membrane filtering treatment section for separating a permeated liquid through a filter membrane to concentrate the adsorbent adsorbing said hardly decomposable substance,
   a flocculating agent adding section for adding a flocculating agent to water containing the adsorbent adsorbing said concentrated hardly decomposable substance, to flocculate the adsorbent adsorbing said hardly decomposable substance,
   a solid-liquid separating section for separating the adsorbent adsorbing the hardly decomposable substance and being flocculated by said flocculating agent, and
   a chemical decomposition treatment section for oxidation-decomposing the hardly decomposable substance adsorbed on said adsorbent separated, with a peroxide.

According to a third aspect of this invention, the following methods for concentrating hardly-decomposable-substance-containing water are provided.
[15] A method for concentrating a hardly decomposable substance in hardly-decomposable-substance-containing water, which comprises the steps of
   (B) adding an adsorbent to water containing a hardly decomposable substance (treatment raw water) to cause the hardly decomposable substance to be adsorbed on said adsorbent (adsorption treatment step), and
   (C) separating a permeated liquid through a filter membrane to concentrate the adsorbent adsorbing said hardly decomposable substance (membrane filtering treatment step). [16] A method for concentrating a hardly decomposable substance in hardly-decomposable-substance-containing water as recited in the above [15], which further comprises the step of
   (A) separating a permeated liquid from the water containing a hardly decomposable substance through a reverse osmosis membrane (RO membrane) or a nano-filter membrane (NF membrane), to concentrate the hardly decomposable substance (membrane concentrating treatment step).
[17] A method for concentrating a hardly decomposable substance in hardly-decomposable-substance-containing water as recited in the above [16], wherein at least part of the hardly decomposable substance concentrated in said step (A) is returned to said water containing a hardly decomposable substance (treatment raw water).

According to a fourth aspect of this invention, a method for treating water concentrated according to the above third aspect of this invention is provided.
[18] A method for treating water containing a hardly decomposable substance, which comprises irradiating a hardly decomposable substance concentrated by the method for concentrating a hardly decomposable substance in hardly-decomposable-substance-containing water as recited in any one of the above [15] to [17], with light to decompose the hardly decomposable substance.

According to the first and second aspects of this invention, hardly decomposable substances such as dioxins, etc, which are contained in water, can be efficiently decomposed and removed without being influenced by their concentrations.
According to the first and second aspects of the invention, chemical decomposition based on an oxidizing agent and photodegradation based on irradiation with ultraviolet light are combined, whereby a hardly decomposable substance contained in water can be efficiently reduced to a low level and there can be provided a highly reliable treatment system.

According to the first and second aspects of this invention, further, the above chemical decomposition treatment is carried out in a state where a hardly decomposable substance is adsorbed on a solid, without carrying out the desorbing operation, whereby the above adsorbent can be regenerated, so that the adsorbent can be repeatedly used.

According to the third aspect of this invention, a hardly decomposable substance in hardly-decomposable-substance-containing water can be efficiently concentrated.

According to the first, second and fourth aspects of the present invention, water containing a hardly decomposable substance can be efficiently and safely treated in a closed system, and the entire treatment is completed within a site where hardly-decomposable-substance-containing water occurs, so that there is no longer the necessity of the transportation of a hardly decomposable substance that would cause environmental pollution, and the environment is in no case adversely affected.

### [Brief Description of Drawings

Fig. 1 is a flow chart showing the constitution of steps essential for the method for treating hardly-decomposable-substance-containing water in this invention.
Fig. 2 is a flow chart showing one embodiment of the method for treating hardly-decomposable-substance-containing water in this invention.
Fig. 3 is a schematic drawing of a treatment apparatus for carrying out one embodiment of the method for treating hardly-decomposable-substance-containing water in this invention.
Fig. 4 shows one embodiment of an apparatus including a multiple filtering step in this invention.
Fig. 5 shows another embodiment of the apparatus including a multiple filtering step in this invention.
Fig. 6 is a schematic drawing of an apparatus used in Example 1.
Fig. 7 is a schematic drawing of an apparatus used in Example 2.
Fig. 8 is a schematic drawing of an apparatus used in Example 3.
Fig. 9 is a schematic drawing of an apparatus used in Example 4.
Fig. 10 is a schematic drawing of an apparatus used in Example 5.
Fig. 11 is a schematic drawing of an apparatus used in Example 6.
Fig. 12 is a schematic drawing of an apparatus used in Example 7.
Fig. 13 is a schematic drawing of an apparatus used in Examples 8 and 9.
Fig. 14 is a schematic drawing of an apparatus used in Example 10.
Fig. 15 is a schematic drawing of an apparatus used in Example 11.
Fig. 16 is a schematic drawing of an apparatus used in Example 12.

### [Best Mode for Carrying out the Invention]

The present invention will be explained in detail hereinafter.
The method for treating hardly-decomposable-substance-containing water according the first aspect of the present invention (to be referred to as "the method of this invention" hereinafter) comprises the steps of
(B) adding an adsorbent to water containing a hardly decomposable substance (treatment raw water) to cause the hardly decomposable substance to be adsorbed on said adsorbent (adsorption treatment step),
(C) separating a permeated liquid through a filter membrane to concentrate the adsorbent adsorbing said hardly decomposable substance (membrane filtering treatment step), and
(D) chemically decomposing the hardly decomposable substance adsorbed on said concentrated adsorbent with a peroxide without any operation of desorption from said adsorbent (chemical decomposition step).

The method of this invention is a method in which a hardly decomposable substance contained in water is concentrated by filtering treatment through a membrane and removed from the water, and the concentrated hardly decomposable substance is rendered harmless by chemical decomposition and optionally by photodegradation.
In this invention, "concentrating" of a hardly decomposable substance or an adsorbent adsorbing a hardly decomposable substance means that the concentration of a hardly decomposable substance in water containing it or an adsorbent adsorbing a hardly decomposable substance is increased.

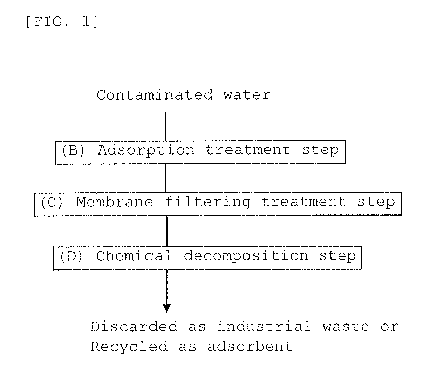

Fig. 1 shows essential steps in the method of this invention.

Examples of the hardly decomposable substance that can be rendered harmless by the method of this invention include dioxins that are harmful contaminants in soil or sludge and also include other endocrine-disrupting substances and carcinogenic substances and the like.

The above dioxins include, for example, halogenated dibenzodioxins, halogenated dibenzofurans, PCBs (in particular, coplanar PCBs in which a chlorine atom is substituted in a position other than an ortho-position).

Examples of the halogenated dibenzodioxins include 2,3,7,8-tetrachlorobenzo-p-dioxin, 1,2,3,7,8-pentachlorodibenzo-p-dioxin, 1,2,3,4,7,8-hexachlorodibenzo-p-dioxin, 1,2,3,4,6,7,8-heptachlorodibenzo-p-dioxin and 1,2,3,4,6,7,8,9-octachlorodibenzo-p-dioxin.

Examples of the halogenated dibenzofurans include 2,3,7,8-tetrachlorodibenzofuran, 1,2,3,7,8-pentachlorodibenzofuran, 1,2,3,4,7,8-hexachlorodibenzofuran, 1,2,3,4,6,7,8-heptachlorodibenzofuran and 1,2,3,4,6,7,8,9-octachlorodibenzofuran.

Examples of the PCBs (in particular, coplanar PCBs in which a chlorine atom is substituted in a position other than an ortho-position) include 3,3',4,4',5-tetrachlorobiphenyl, 3,3',4,4',5-pentachlorobiphenyl and 3,3',4,4',5,5'-hexachlorobiphenyl.

The endocrine-disrupting substances other than dioxins and carcinogenic substances include alkylphenols such as t-butyl phenol, nonyl phenol and octyl phenol, halogenated phenols such as tetrachlorophenol and pentachlorophenol, bisphenols such as 2,2-bis(4-hydroxyphenyl)propane (bisphenol A) and 1-bis(4-hydroxyphenyl)cyclohexane, polycyclic aromatic hydrocarbons such as benzopyrene, chrysene, benzoanthracene, benzofluoranthene and picene and phthalic esters such as dibutyl phthalate, butyl benzyl phthalate and di-2-ethylhexyl phthalate.

In addition to the above dioxins and PCBs, hardly decomposable organic halogen compounds such as dichloropropane, trichloroethane, trichloroethylene, tetrachloroethylene and dichloroethylene can be also removed by photodegradation or chemical decomposition according to the method of this invention.

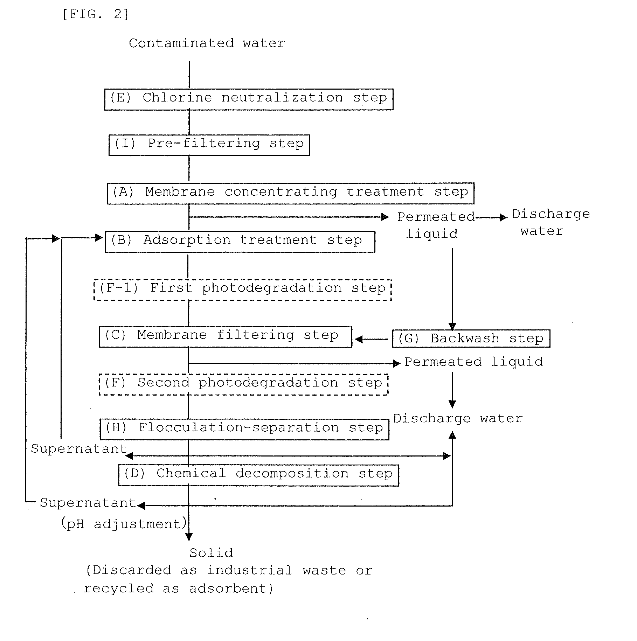

The method of this invention includes (B) the adsorption treatment step, (C) the filtering treatment step and (D) the chemical decomposition step and may optionally include at least one step selected from the group consisting of (A) the membrane concentrating treatment step, (E) the chlorine neutralization step, (I) a pre-filtering step, (F) the photodegradation step, (G) the backwash step and (H) the flocculation-separation step. Each of the above steps may be carried out once or may be carried out twice or more. By carrying out one or two of the steps a plurality of times, the method of this invention becomes more reliable and hardly decomposable substances can be decomposed and removed to a lower level. Each step will be explained below with reference to Fig. 2.

(E) Chlorine neutralization step
   This is a step of neutralizing residual chlorine in hardly-decomposable-substance-containing water. Residual chlorine is preferably removed in advance since it oxidizes a reverse osmosis membrane to cause it to be deteriorated. A chlorine concentration is measured with a chlorine concentration meter, and a proper amount of a reducing substance is added.
   The reducing substance includes sodium bisulfite, sodium metabisulfite and sulfur dioxide, and of these, sodium bisulfite is preferred.

(I) Pre-filtering step
   This is a step of filtering hardly-decomposable-substance-containing water, for example, with a 10 µm prefilter for preventing foreign particles in the water from clogging a reverse osmosis membrane.

(A) Membrane concentrating treatment step
   This is a step of separating a permeated liquid from hardly-decomposable-substance-containing water through a reverse osmosis membrane (RO membrane) or a nano-filter membrane (NF membrane) to concentrate a hardly decomposable substance. For example, since dioxin has a molecular weight of 200 or more, it can be isolated through a reverse osmosis membrane or a nano-filter membrane at the molecular level. The reverse osmosis membrane and the nano-filter membrane do not pass not only a hardly decomposable substance but also a salt contained in the water through them. Therefore, the salt is concentrated at the same time, so that the osmotic pressure of the hardly-decomposable-substance-containing water increases and that the filtering performance is decreased.
   The "salt" as used herein includes all the kinds of salts (inorganic salts of alkali metals) contained in the hardly-decomposable-substance-containing water and mainly includes sodium chloride, metabisulfite or bisulfite, and sodium bisulfate. Sodium chloride is generated when residual chlorine is neutralized, and much sodium chloride is contained in the hardly-decomposable-substance-containing water to be treated.

The operation pressure in the membrane concentrating treatment with a reverse osmosis membrane is not specially limited. However, with an increase in the operation pressure, generally, the ratio of removal of hardly decomposable substances such as dioxin is increased, so that the operation is preferably carried out at 1 MPa or more, more preferably at 1.5 MPa or more, which is higher than generally set 0.3 MPa. Further, for operating the reverse osmosis membrane for a long period of time and for preventing a decrease in the removal ratio caused by the concentration of circulating water, the ratio of concentrated water: permeated liquid can be determined as required depending upon properties of discharge water. However, it is generally in the range of 1:99 to 80:20, preferably 30:70 to 60:40, particularly preferably 50:50.

The material for constituting the reverse osmosis membrane (to be sometimes referred to as RO membrane hereinafter) includes resin materials such as a polyamide material (including crosslinked polyamide and aromatic polyamide materials), an aliphatic amine condensate material, a heterocyclic polymer material, a cellulose acetate material, a polyethylene material, a polyvinyl alcohol material and a polyether material.

The reverse osmosis membrane is not specially limited in membrane form, and it may be an asymmetric membrane or a composite membrane.
Further, as a membrane module, there can be employed a flat type, a hollow fiber type, a spiral wound type, a cylindrical type, a pleated type, or the like as required.

The material for constituting the nano-filter membrane (NF membrane) includes resin materials such as a polyamide material (including crosslinked polyamide and aromatic polyamide materials), an aliphatic amine condensate material, a heterocyclic polymer material, a cellulose acetate material, a polyethylene material, a polyvinyl alcohol material and a polyether material.

The nano-filter membrane is not specially limited in membrane form, and like the above reverse osmosis membrane, it can be an asymmetric membrane or a composite membrane.
Further, as a membrane module, there can be employed a module of a flat type, a hollow fiber type, a spiral wound type, a cylindrical type, a pleated type, or the like as required.

While the salt elimination of the reverse osmosis membrane (sodium chloride elimination ratio) is not specially limited, it is preferred to select a reverse osmosis membrane having a selectivity of approximately 95% or more. Further, when a nano-filter membrane is used, it is preferred to use a nano-filter membrane having a selectivity of approximately 40% or more in terms of salt elimination.
Further, in the membrane concentrating treatment with the above reverse osmosis membrane or nano-filter membrane, a liquid portion that does not pass the membrane (concentrated water) may be returned to the hardly-decomposable-substance-containing water that is not yet treated.

(B) Adsorption treatment step
   This is a step of adding an adsorbent to the hardly-decomposable-substance-containing water (treatment raw water) or water in which the hardly decomposable substance is concentrated in the above step (A), to cause the hardly decomposable substance to be adsorbed on the adsorbent. When the hardly decomposable substance or the water concentrated by the above membrane concentrating treatment is subjected to (C) the membrane filtering treatment step, the hardly decomposable substance cannot be concentrated since the molecular cutoff of the filter membrane is large as compared with the size of the hardly decomposable substance such as dioxin. Therefore, an adsorbent is added to cause the hardly decomposable substance, which is fine, to be adsorbed on adsorbent particles that are large, and then (C) the membrane filtering treatment is carried out, whereby the hardly decomposable substance is concentrated.

The adsorbent for use in the method of this invention includes an inorganic porous material and an organic porous material. Specifically, the adsorbent includes inorganic porous materials such as zeolite, diatomite, acid clay, activated clay and carbon black, metal oxides such as titanium dioxide, inorganic adsorbents such as a metal powder, activated carbon organic porous materials such as and an ion-exchange resin. These may be used singly or in combination of at least two materials of these. As an adsorbent, inorganic adsorbents are preferred, and of these, titanium dioxide having high adsorption efficiency is particularly preferred.
Further, when (F-1) and (F-2) photodegradation steps to be described later are provided, it is preferred to use an adsorbent that can work as a photocatalyst, and an example of such an adsorbent is titanium dioxide.

The amount of the adsorbent to be added can be determined as required by taking account of the kind of the adsorbent, adsorption performances, the kind and amount of a contaminant to be treated, a treatment time period, a cost, and the like. Generally, it can be 1 to 1,000 ppm, and it is preferably 10 to 100 ppm.
When titanium dioxide is used as an adsorbent, the amount of an adsorbed hardly decomposable substance increases as the amount of titanium dioxide is increased, while the cost increases. The amount of titanium dioxide to be added should be therefore determined as required by taking account of a cost, and the like, and generally, it is preferably in the range of 1 to 100,000 ppm, more preferably in the range of 10 to 1,000 ppm.
Further, for improving the adsorption efficiency and decomposition efficiency, it is preferred to use an adsorbent having a large specific surface area. For example, when the adsorbent is titanium dioxide, titanium dioxide having an X-ray particle diameter of approximately 7 nm is preferred.

Further, with an increase in the contact time period for which the adsorbent is in contact with the hardly-decomposable-substance-containing water, the adsorption efficiency is improved. However, the contact time period can be determined as required by taking account of the size of a treatment vessel, or the like, and preferably, it is approximately 1 to 2 hours.

(F) Photodegradation step
   This is a step of irradiating water containing the hardly decomposable substance or an adsorbent adsorbing the hardly decomposable substance, with ultraviolet light to decompose the hardly decomposable substance. That is, the hardly decomposable substance that is not adsorbed on the adsorbent in water and part of the hardly decomposable substance adsorbed on the adsorbent in water are decomposed. When this step is provided, discharge water after the treatment can have a hardly decomposable substance concentration that is decreased to a lower level.
   In this step, further, when the adsorbent for use in this invention is titanium dioxide, the hardly decomposable substance in water can be more efficiently photodegraded by carrying out irradiation with light (preferably 250 to 380 nm). The longer the time period for the photodegradation is, the higher the decomposition efficiency is. For example, the addition of 20 ppm of titanium dioxide and the irradiation with ultraviolet light (254 nm) for 30 minutes result in a dioxins-decomposition-efficiency of appropriately 60 to 70%.

(C) Membrane filtering treatment step
   This is a step of separating a permeated liquid that contains salts but substantially does not contain the hardly decomposable substance, through a filter membrane that does not pass an adsorbent adsorbing the hardly decomposable substance but passes salts, to obtain water having an increased concentration of the adsorbent adsorbing the hardly decomposable substance. By this step, salts can be removed.

The membrane for use in the membrane filtering treatment is not specially limited in kind so long as it has the above separation capability. In view of excellent separation capability and easiness in handling, the membrane is preferably selected, for example, from an ultrafilter membrane (UF membrane), a nano-filter membrane (NF membrane), a microfiltration membrane (MF membrane), a reverse osmosis membrane (RO membrane), or the like.

Of these, an ultrafilter membrane (to be sometimes referred to as "UF membrane" hereinafter) is capable of fully removing a fine adsorbent adsorbing dioxins and fine particles of water-insoluble dioxin when used, and it is also excellent in operability and economic performance.

The material for constituting the ultrafilter membrane (UF membrane) includes resin materials such as a cellulose acetate material, a polyacrylonitrile material, a polysulfin material and a polyether sulfone material.
As a membrane module, there can be employed a module having a flat type, a hollow fiber type, a spiral wound type, a cylindrical type, a pleated type, or the like as required.
While the molecular cutoff of the ultrafilter membrane is not specially limited, there can be used an ultrafilter membrane having a molecular cutoff of approximately 3,000 to 150,000.

The material for constituting the microfiltration membrane (MF membrane) includes resin materials such as a cellulose ester material, a polyacrylonitrile material, a polysulfin material and a polyether sulfone material. As a type, further, a flat type, a filter cartridge type, a disposal cartridge type and the like can be selected as required.
While the size of openings (pores) of the microfiltration membrane can be determined as required depending upon the particle diameter of an adsorbent to be used for the adsorption treatment, it can be approximately 0.01 to 1 µm.

In addition, the reverse osmosis membrane (RO membrane) and the nano-filter membrane (NF membrane) are as explained with regard to the above (A) the membrane concentrating treatment step.

(G) Backwash step
   This is a step of backwashing the filter membrane used in the above (C) step to free the adsorbent adsorbing the hardly decomposable substance from the filter membrane. When the ultrafilter membrane is used in the above (C) step, the adsorbent adsorbing the hardly decomposable substance (in particular, when titanium dioxide is used as an adsorbent) causes the ultrafilter membrane to be clogged. Therefore, for preventing the decrease of the filtering ability of the above filter membrane, preferably, the filter membrane is backwashed periodically. While the frequency of the backwashing can be selected as required, the backwashing is preferably carried out, for example, once every 30 to 120 minutes, and for about 1 to 10 minutes each time. Further, when the above backwashing is carried out, it is preferred to use clean water free of a solid. It is economically preferred to use the permeated liquid obtained in the above (A) membrane concentrating treatment step or the permeated liquid obtained in the (C) membrane filtering treatment step as water for the backwash (backwash water). The permeated liquid obtained in the above (A) membrane concentrating treatment step is particularly preferred.

And, it is preferred to add a bactericide such as sodium hypochlorite, or the like to the backwash water for sterilization, and the sodium hypochlorite can be added in such an amount that the residual chlorine concentration after the backwashing is in the range of 1 to 100 mg/L.

For improving the efficiency in the decomposition of the hardly decomposable substance in steps to follow, water that is transferred to the (D) chemical decomposition step to be described later preferably consists of only backwash discharge water from which the adsorbent adsorbing the hardly decomposable substance is washed off. Alternatively, the hardly decomposable substance concentration water obtained in the (A) membrane concentrating treatment step may be transferred to the (D) chemical decomposition step as required.

(H) Flocculation-separation step
   This is a step of adding a flocculating agent to water containing the adsorbent adsorbing the hardly decomposable substance, to flocculate and separate the adsorbent adsorbing the hardly decomposable substance. More specifically, this is a step of adding a flocculating agent to water containing the adsorbent adsorbing the hardly decomposable substance concentrated in the above (C) step or the backwash discharge water obtained in the above (G) step, to further flocculate the adsorbent adsorbing the hardly decomposable substance, and thereby obtaining a flocculation substance containing the hardly decomposable substance. The flocculation substance is generally a precipitated substance (precipitate), while it may be a flocculation substance (floating substance) that floats and aggregates on a liquid surface.
   A liquid (supernatant liquid, usually) obtained by separation of the flocculation substance containing the hardly decomposable substance in this step can be returned to any step in the treatment method of this invention. Further, when the hardly decomposable substance concentration is lower than the emission standard value, it may be discharged.

The adsorbent adsorbing the hardly decomposable substance is fine and solid-liquid separation takes time. This step is carried out for decreasing this time period and the decomposition efficiency in the subsequent (D) chemical decomposition step.

As a flocculating agent, an inorganic flocculating agent or an organic flocculating agent may be used alone, or both may be used in combination. Examples of the inorganic flocculating agent include aluminum sulfate, ferric chloride, ferrous sulfate, polyaluminum chloride and a zeolite-based agent.

Examples of the organic flocculating agent include various anionic polymer flocculating agents and cationic polymer flocculating agents, such as sodium polyacrylate, a copolymer of sodium acrylate and acrylamide.

The flocculating agent is not specially limited so long as it causes no adverse effect in the (D) chemical decomposition step. However, preferred is an agent composed mainly of an inorganic material that gives a flocculation substance having high bulk density when used in a small amount.

Like the adsorbent, the amount of the flocculating agent can be determined as required by taking account of the kind of the flocculating agent, the adsorption capability, a cost and the like. It is generally 1 to 10,000 ppm, preferably 10 to 1,000 ppm. When it is taken into account to decrease the amount of a finally discharged solid so that it is as small as possible, the amount of the flocculating agent is preferably to such a degree that the amount is not excessive.

(D) Chemical decomposition step
   This is a step of adding a peroxide to the adsorbent adsorbing the hardly decomposable substance concentrated in the above step (C) or the flocculation substance (precipitate or suspended substance) obtained in the step (H), to oxidation-decompose the hardly decomposable substance. When the chemical decomposition is carried out, the peroxide is caused to react with the hardly decomposable substance adsorbed on the adsorbent without carrying out the operation of desorbing the hardly decomposable substance from the adsorbent, whereby the hardly decomposable substance can be rendered harmless by the decomposition without causing the hardly decomposable substance to fly outwardly.
   The above peroxide for chemically decomposing the hardly decomposable substance may react with the hardly decomposable substance while having the form of a compound as it is. Otherwise, it may react with the hardly decomposable substance in the form of a compound formed by a change in water, ion, radical, or the like.

The peroxide for use in this step include various metal salts such as permanganate, persulfate, sodium peroxide, barium peroxide, zinc peroxide, cadmium peroxide, potassium peroxide, calcium peroxide and chromium peroxide, hydrogen peroxide, ozone and a system using a metal catalyst and a hydrogen-supplying material in combination.
Of these, peroxides that are preferably used as an oxidizing agent are permanganate and persulfate.

The permanganate includes zinc permanganate, cadmium permanganate, potassium permanganate, calcium permanganate, silver permanganate, strontium permanganate, cesium permanganate, sodium permanganate, barium permanganate, magnesium permanganate, lithium permanganate and rubidium permanganate.

The persulfate includes ammonium persulfate, sodium persulfate, potassium persulfate, potassium hydrogen persulfate, lead persulfate and rubidium persulfate. As an oxidizing agent, persulfates such as ammonium persulfate, sodium persulfate and potassium persulfate are particularly preferred. These may be used singly or may be used in combination of two compounds or more of these. The amount thereof based on the molar amount of the hardly decomposable substance adsorbed on the adsorbent is preferably at least 100 times by mole, more preferably in the range of 10⁴ to 10¹² times by mole, still more preferably 10⁷ to 10¹⁰ times by mole. When the molar amount of the peroxide is at least 100 times the molar amount of the hardly decomposable substance, the hardly decomposable substance adsorbed on the adsorbent can be stably chemically decomposed to such an amount that is the emission standard value (3,000 pg-TEQ/g) of industrial waste or less even if the concentration of the hardly decomposable substance in the hardly-decomposable-substance-containing water varies.

Specifically, the amount of the peroxide can be determined as required depending upon the kind and concentration of the hardly decomposable substance of a hardly-decomposable-substance-containing material and the kind and concentration of a co-present substance. When the hardly-decomposable-substance-containing material is in the state of a liquid, the above amount is preferably 100 to 100,000 ppm, particularly preferably 1,000 to 50,000 ppm. When the hardly-decomposable-substance-containing material is a solid, the amount of the peroxide based on the hardly-decomposable-substance-containing material is preferably 0.01 to 100 mass%, particularly preferably 0.1 to 20 mass%.

The amount of the peroxide to be added differs depending upon the pH of water to be treated, and when the reaction alone is promoted, the peroxide can be added by taking account of the oxidizing power of the persulfate.
For promoting the decomposition by the peroxide, further, it is preferred to allow the peroxide to react with the hardly decomposable substance in a state where the peroxide is dissolved in the water. Further, other oxidizing agents such as hydrogen peroxide and ozone may be co-present.

For carrying out the above decomposition reaction more effectively, further, a proper amount of an organic solvent may be added to this reaction system. The above organic solvent is suitably selected from hydrocarbons having 2 to 12 carbon atoms, such as n-hexane, toluene, xylene, methylphthalene or the like.

Persulfate is decomposed by heating to generate bisulfate ion radical, sulfate ion radical and hydroxyl radical, and these radicals decompose the hardly decomposable substance such as dioxins. Since these radicals release electrons for a short period of time, it is preferred to bring the adsorbent adsorbing the hardly decomposable substance into a slurry state and stir the slurry for improving the decomposition efficiency. The more severely the stirring is carried out, the higher the probability of contact of the radicals to the hardly decomposable substance is. Severe stirring is hence advantageous. However, the stirring has its own limit, and it is preferred to carry out the stirring severely to an extent that it is not much disadvantageous in economic performance, depending upon the volume of a decomposition vessel and the viscosity of the slurry.

The reaction temperature for the chemical decomposition of the hardly decomposable substance adsorbed on the adsorbent with the peroxide is preferably room temperature to 100°C, more preferably 40°C to 100°C. When the reaction temperature is lower than 40°C, the decomposition may take a longer time in some cases.

The higher the temperature for the chemical decomposition is, the higher the decomposition rate is. For decomposition treatment at the boiling temperature of water (higher than 100°C when the salt concentration is high) or higher, a pressure vessel is required, so that it is preferred to carry out the decomposition treatment under atmospheric pressure at the boiling temperature or lower.
In addition, when the decomposition treatment is carried out under atmospheric pressure at the boiling point or higher, water is evaporated and the hardly decomposable substance such as dioxin or the like is also evaporated as the temperature is increased, so that it comes to be required to provide waste gas treatment equipment from the viewpoint of secondary pollution prevention.

When heating is employed in this invention, the heating method is not specially limited, and any one of an electrical heating method, a hot water supplying method, a water vapor sucking method, a boiler method, etc., can be employed. In the hot water supplying method, it is required to be careful not to increase the content of water to excess. When the water content is too large, the concentration of the persulfate for the reaction decreases. While the time period for the chemical decomposition treatment cannot be uniformly determined since it is influenced by the treatment temperature and other conditions, it is generally approximately 10 minutes to 500 hours.

With regard to the adsorbent adsorbing the hardly decomposable substance, which has been subjected to the chemical decomposition, the adsorbent can be discarded like usual industrial waste after it is confirmed that the content of hardly decomposable organic compounds in the adsorbent after the chemical decomposition is the emission standard value (3,000 pg-TEQ/g) or less.

Further, the adsorbent that is once used for the adsorption of the hardly decomposable substance can be repeatedly used without immediately discarding it, until the performance thereof as an adsorbent decreases, and discharge water can be treated on site in a closed system. The method of this invention is hence remarkably highly safe and economical. Further, when the above adsorbent used for adsorbing the hardly decomposable substance is finally discarded, it can be discarded after the residual content of the hardly decomposable substance is fully reduced, so that the adsorbent has no detrimental effect on natural surroundings.

For further reducing the waste material, the decomposition substance may be allowed to stand for solid-liquid separation after completion of the chemical decomposition in the step (D). Supernatant obtained by the solid-liquid separation of the decomposition substance can be returned to any step in the treatment method of this invention. Further, if the hardly decomposable substance concentration is the emission standard value or less, the supernatant may be discharged.
On the other hand, a settled substance can be discarded as industrial waste after it is confirmed that the content of hardly decomposable substance is 3,000 ppm-TEQ/g or less.

The apparatus for treating hardly-decomposable-substance-containing water according to the second aspect of this invention (to be referred to as the apparatus of this invention hereinafter) comprises
an adsorbent adding section for adding an adsorbent to hardly-decomposable-substance-containing water (treatment raw water),
a membrane filtering treatment section for separating a permeated liquid through a filter membrane to concentrate the adsorbent adsorbing said hardly decomposable substance, and
a chemical decomposition treatment section for oxidation-decomposing said hardly decomposable substance adsorbed on said adsorbent with a peroxide.

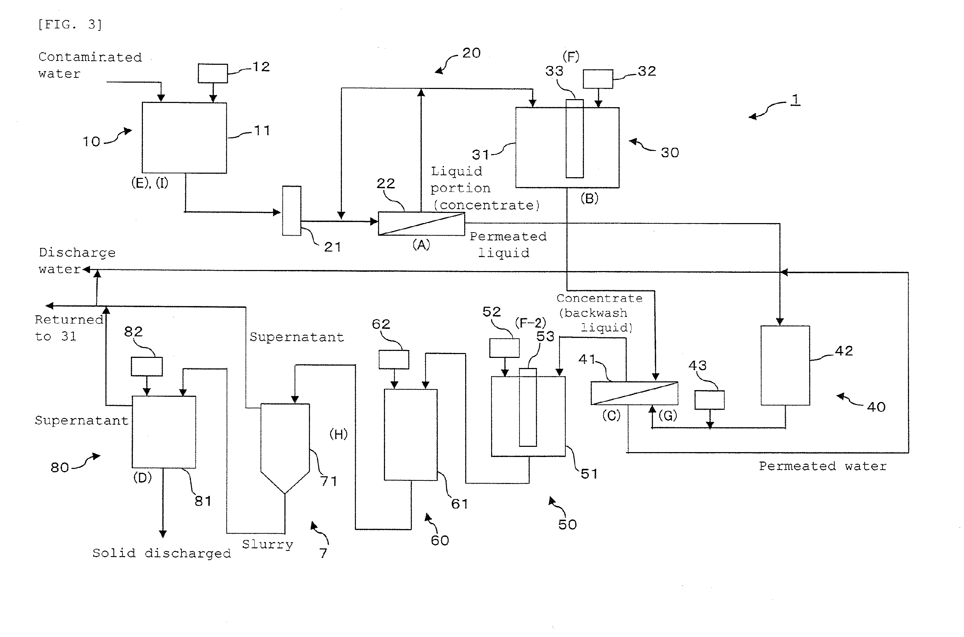

One or two or more sections may be provided for each of the above sections. Fig. 3 to 5 show embodiments in which two or more sections are provided as one of the above sections.

A particularly preferred embodiment of the apparatus of this invention comprises
a reducing substance introduction section for introducing a reducing substance to water containing a hardly decomposable substance (treatment raw water) to neutralize chlorine in said water,
a membrane concentrating treatment section for separating a permeated liquid from the water containing a hardly decomposable substance through a reverse osmosis membrane (RO membrane) or a nano-filter membrane (NF membrane) to concentrate the hardly decomposable substance,
an adsorbent adding section for adding an adsorbent to said hardly decomposable substance concentrated, to cause the adsorbent to adsorb the hardly decomposable substance,
a membrane filtering section for separating a permeated liquid through a filter membrane to concentrate the adsorbent adsorbing said hardly decomposable substance,
a flocculating agent adding section for adding a flocculating agent to water containing the adsorbent adsorbing said concentrated hardly decomposable substance, to flocculate the adsorbent adsorbing said hardly decomposable substance,
a solid-liquid separating section for separating the adsorbent adsorbing the hardly decomposable substance and being flocculated by said flocculating agent, and
a chemical decomposition treatment section for oxidation-decomposing the hardly decomposable substance adsorbed on said adsorbent separated, with a peroxide.

With regard to one example of the preferred embodiment of the apparatus of this invention, the entire flow of the treatment of hardly-decomposable-substance-containing water will be explained below with reference to Fig. 3.
Fig. 3 is a schematic drawing of a treatment apparatus 1 for practicing one embodiment of the method for treating hardly-decomposable-substance-containing water in this invention. A treatment apparatus 1 shown in Fig. 3 has, as a basic constitution, a reducing substance introduction section 10, a membrane concentrating treatment section 20, an adsorbent adding section 30, a membrane filtering treatment section 40, a flocculating agent adding section 60, a solid-liquid separating section 70 and a chemical decomposition treatment section 80. Fig. 3 also shows an ultraviolet irradiation section 50 that is provided as required.

### [Reducing substance introduction section 10]

First, water containing a hardly decomposable substance such as dioxins is placed in an introduction tank 11. Sodium bisulfite is introduced into the introduction tank 11 through a pump that is not shown from a reducing substance supply portion 12, to neutralize free chlorine in raw water. In the introduction tank 11, further, the raw water and the sodium bisulfite are mixed with stirring means, and the concentration of residual chlorine in the raw water is measured with a chlorine meter that is not shown.

### [Membrane concentrating treatment section 20]

The hardly-decomposable-substance-containing water neutralized with sodium bisulfite passes through a prefilter 21, whereby a suspending substance, etc., can be removed. Water that passes through the prefilter 21 is sent to a reverse osmosis membrane 22 through a pump that is not shown, and membrane-treated with this reverse osmosis membrane 22. And, the water is separated into a permeated liquid that has passed through the reverse osmosis membrane 22 and a liquid portion (concentrate) that has not passed the membrane.
Of these liquids, the permeated liquid that has passed the reverse osmosis membrane 22 can be discharged outwardly if the content of the hardly decomposable substance therein is the emission standard value (10 pg-TEQ/L) or less. Alternatively, the permeated liquid above can be reserved in a backwash tank 42 of a membrane filtering treatment section 40 as described later and can be used as backwash water for backwashing an ultrafilter membrane 41.

Further, as shown in Fig. 3, the liquid portion (concentrate) that has not passed through the reverse osmosis membrane 22 is again subjected to the reverse osmosis membrane treatment by mixing it with the hardly-decomposable-substance-containing water that has passed through the prefilter 21.
In this manner, the concentrate is recycled several times. A concentrate that has not passed through the reverse osmosis membrane 22 by this procedure is sent to a treatment tank 31 provided in an adsorbent adding-ultraviolet irradiation section 30.

### [Adsorbent adding section 30]

In the adsorbent adding section 30, to the liquid portion (concentrate) sent to the treatment tank 31 was added an adsorbent that is sent from an adsorbent supply section 32 through a feeder that is not shown. In the treatment tank 31, the liquid portion of the concentrate and the adsorbent are mixed by stirring means, so that the hardly decomposable substance remaining in the liquid portion is efficiently adsorbed on the added adsorbent.

Further, when titanium dioxide is used as an adsorbent, the hardly decomposable substance in the liquid portion is adsorbed on the adsorbent, and at the same time, the hardly decomposable substance can be photodegraded by irradiation with ultraviolet light from a UV lamp 33. In this case, the titanium dioxide as an adsorbent works as a photocatalyst and promotes the photodegradation of the hardly decomposable substance.

### [Membrane filtering treatment section 40]

The liquid portion (concentrate) having the adsorbent added thereto is subjected to membrane filtering treatment with an ultrafilter membrane 41 through a pump that is not shown, in a membrane filtering treatment section 40. When the membrane filtering treatment with the ultrafilter membrane 41 is carried out, the decrease of the filtering ability of this ultrafilter membrane 41 can be prevented by backwashing it. On the other hand, for the above backwashing, the permeated liquid that passes through the reverse osmosis membrane 22 in the membrane concentrating treatment section 20 may be used as water (backwash water) for the backwashing as shown in Fig. 3.
And, to the above backwash water from a backwash water tank 42, sodium hypochlorite may be added from a fungicide supply portion 43 through a pump that is not shown.

By the membrane filtering treatment with the ultrafilter membrane 41, the liquid portion of the hardly-decomposable-substance-containing water having the adsorbent added thereto is separated into a permeated liquid and a concentrate (liquid obtained by backwashing). Of these, the permeated liquid can be discharged outwardly as discharge water if the content of the hardly decomposable substance is the emission standard value (10 pg-TEQ/L) or less.

### [Ultraviolet irradiation section 50]

In an ultraviolet irradiation section 50, the concentrate (liquid obtained by backwashing) that has not passed through the ultrafilter membrane 41 in the membrane filtering treatment section 40 may be send to a decomposition tank 51 and may be irradiated with ultraviolet light from an ultraviolet lamp 53 with stirring by stirring means to decompose the hardly decomposable substance. In this ultraviolet irradiation section 50, for promoting photodegradation by ultraviolet light, aqueous hydrogen peroxide may be added from a promoter supply portion 52 through a pump that is not shown.
For carrying out the photodegradation in this invention, the adsorbent to be added in the adsorbent adding section 30 is required to be titanium dioxide which works as a photocatalyst. By the use of titanium dioxide, photodegradation treatment having high decomposition capability is carried out.

### [Flocculating agent adding section 60]

In a flocculating agent adding section 60, a flocculating agent that is sent from a flocculating agent supply portion 62 through a feeder that is not shown is added to the concentrate (liquid obtained by backwashing) containing the hardly decomposable substance that is sent to a flocculating vessel 61, that is concentrated with the ultrafilter membrane and that is optionally subjected to photodegradation treatment. In the flocculating vessel 61, the liquid portion of the concentrate (liquid obtained by backwashing) and the flocculating agent are mixed by stirring means, whereby the hardly decomposable substance adsorbed on the adsorbent, remaining in the liquid portion, is efficiently flocculated with the added flocculating agent, so that it comes to be easily settled.

### [Solid-liquid separating section 70]

In a solid-liquid separation section 70, the hardly decomposable substance that is flocculated with the flocculating agent in the flocculating agent adding section 60 is settled in a settling vessel 71, so that a supernatant and a settled substance (slurry) are separated.
A stirring means that is not shown is provided, and stirring is carried out at a moderate rotation rate of about 1 rpm for keep the settled substance from being solidified in the bottom of the settling vessel 71.
A clean supernatant is returned to the treatment tank 31 of the adsorbent adding section 30, or it can be discharged if the concentration of the hardly decomposable substance is the emission standard value (10 pg-TEQ/L) or less.

### [Chemical decomposition section 80]

In a chemical decomposition section 80, peroxide from an oxidizing agent supply portion 82 is added to the settled substance (slurry) that is sent to a decomposition vessel 81 and that is withdrawn from a bottom outlet of the settling vessel 71 of the above solid-liquid separating section 70, and the mixture is stirred by stirring means to chemically decompose the hardly decomposable substance in the settled substance (slurry).

After completion of the chemical decomposition, a clean supernatant is returned to the treatment tank 31 of the adsorbent adding section 30, or it can be discharged if the concentration of the hardly decomposable substance is the emission standard value (10 pg-TEQ/L) or less.

On the other hand, a solid portion (discharged solid) can be discarded as industrial waste after it is confirmed that it fulfills the emission standard of industrial waste, or it can be recycled as an adsorbent.

The permeated liquids generated in the above (A) reverse osmosis treatment step and (C) membrane filtering step are used as backwash water or returned to the (B) adsorption treatment step as described above, and in addition thereto, it can be discharged outwardly as discharge water if the concentration of the hardly decomposable substance is the emission standard value (10 pg-TEQ/L) or less. Discharging outwardly means in general that it is released into a river or the like.

Meanwhile, when the concentration of a hardly decomposable substance in raw water varies, the outlet concentration of discharge water after discharge water treatment varies in conjunction therewith, and discharge water containing the hardly decomposable substance having a concentration over the emission standard value may possibly be discharged. However, the measurement of concentration of the hardly decomposable substance such as dioxin or the like in discharge water takes approximately one month by an official method or takes approximately two weeks by a simplified method, and it is practically impossible to keep the discharge water for such a period of time.

In this invention, preferably, a plurality of (C) membrane filtering treatment steps are therefore carried out with regard to the permeated liquid for stably bringing the concentration of the hardly decomposable substance in discharge water into the emission standard value or less even when the concentration of the hardly decomposable substance in raw water varies. Further, after the adsorbent is added to the permeated liquid, preferably, the (C) membrane filtering treatment is further carried out.
According to experiments made by the present inventors, it has been confirmed that practicing the membrane filtering treatment twice or more not only brings the hardly decomposable substance concentration stably into the emission standard value (10 pg-TEQ/L) or less, but also brings the same into the environmental standard value (1 pg-TEQ/L) or less. The following Table 1 shows a change in the concentration of dioxin in permeated liquid and a dioxin removal ratio (%) when the membrane filtering treatment was carried out twice.

**Table 1**

| First membrane filtering treatment | Dioxin concentration (pg-TEQ/L) | Second membrane filtering treatment | Dioxin concentration (pg-TEQ/L) |
|---|---|---|---|
| Reverse osmosis membrane permeated water | 2.13 | Reverse osmosis membrane permeated water | ≦1.0 |
| Ultrafilter membrane permeated water | 2.5 | Nano-filter permeated water | ≦1.0 |
| Ultrafilter membrane permeated water + Reverse osmosis membrane permeated water | 1.63 | Nano-filter permeated water | ≦1.0 |
| Ultrafilter membrane permeated water + Reverse osmosis membrane permeated water + addition of 20 ppm TiO₂ | 1.63 | Ultrafilter membrane permeated water | ≦1.0 |
| Ultrafilter membrane permeated water | 5.8 | Ultrafilter membrane permeated water | ≦1.0 |
| Ultrafilter membrane permeated water + addition of 20 ppm TiO₂ and stirring for 1 hour | 5.8 | Ultrafilter membrane permeated water | ≦1.0 |

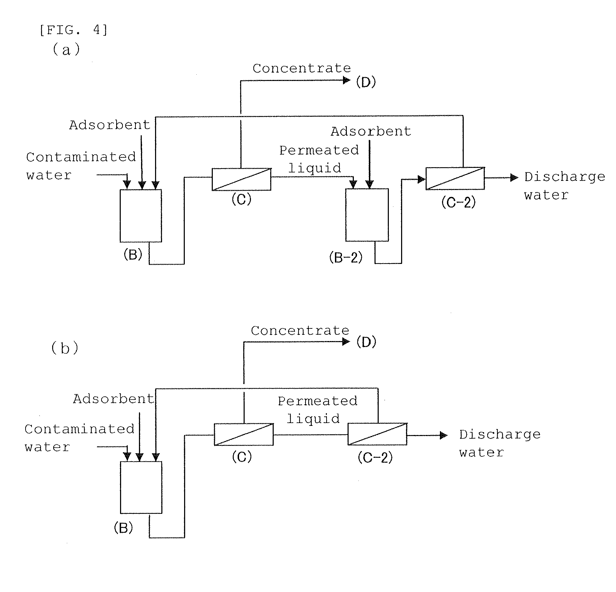

Figs. 4 and 5 show embodiments of a contaminated water treatment system including a plurality of (C) membrane filtering treatment steps.

For example, in an embodiment shown in Fig. 4(a), an adsorbent is added to hardly-decomposable-substance-containing water (raw water) ((B-1) adsorption treatment step), and the mixture is separated into a concentrate and a permeated liquid by membrane filtering ((C-1) membrane filtering treatment step). The concentrate is treated in the above (D) chemical decomposition step. To the permeated liquid is further added an adsorbent ((B-2) adsorption treatment step), and then the mixture is again membrane-filtered ((C-2) membrane filtering treatment step). A concentrate that does not pass through the filter membrane is returned to the (B-1) adsorption treatment step, and a permeated liquid has a hardly decomposable substance concentration of the emission standard value or less, so that it can be discharged outwardly as discharge water.

In an embodiment shown in Fig. 4(b), one (B) adsorption treatment step and two (C) membrane filtering treatment steps are provided, and this embodiment constitutes a more economical system.

In Fig. 5, the hardly-decomposable-substance-containing water is subjected to the membrane concentrating treatment (A) before the adsorbent is added. The filter membrane for use in this case is preferably a reverse osmosis membrane or a nano-filter membrane.
A concentrate from the above membrane concentrating treatment (A) at this initial stage is subjected to membrane filtering treatment (C) after the adsorbent is added (B), to obtain a permeated liquid and a concentrate. The concentrate is transferred to the chemical decomposition step (D).
In Fig. 5(c), to a permeated liquid from the membrane concentrating treatment (A) at the initial stage was further added an adsorbent (B-2), and the mixture is subjected to membrane filtering treatment (C-2) and then gives discharge water. A concentrate from the above membrane filtering treatment (C-2) is subjected to membrane filtering treatment (C) after an adsorbent is added (B) like the concentrate in the membrane concentrating treatment (A) at the initial stage.
To a permeated liquid from the membrane filtering treatment (C-2) was further added an adsorbent (B-3), and the mixture is subjected to membrane filtering treatment (C-3) and then gives discharge water. A concentrate from this membrane filtering treatment (C-3) is subjected to membrane filtering treatment (C) after an adsorbent is added (B) like the concentrate in the membrane concentrating treatment (A) at the initial stage.

In an embodiment shown in Fig. 5(d), one (A) membrane concentrating treatment step, one (B) adsorption treatment step and three (C) membrane filtering treatment steps are provided, and this embodiment constitutes a more economical system than the embodiment shown in Fig. 5(c) in which three (B) adsorption treatment steps are provided.

In an embodiment shown in Fig. 5(e), one (A) membrane concentrating treatment step, one (B) adsorption treatment step and two (C) membrane filtering steps are provided, and this embodiment constitutes a more economical system than the embodiment shown in Fig. 5(d) in which three (C) membrane filtering treatment steps are provided.

According to the method and apparatus of this invention, (A) membrane concentrating treatment steps and a plurality of membrane filtering steps are provided as shown in Figs. 3 to 5, whereby the concentration of hardly decomposable substances such as dioxins, etc., in discharge water can be stably reduced to the emission standard value or less.

According to the method and apparatus of this invention, further, the hardly decomposable substances contained in contaminated water are treated by a combination of concentration, photodegradation and chemical decomposition, whereby the concentration of the hardly decomposable substances can be unconventionally stably reduced.

The method for concentrating a hardly decomposable substance in hardly-decomposable-substance-containing water according to the third aspect of the invention (to be referred to as "concentration method of this invention" hereinafter) comprises the steps of
(B) adding an adsorbent to water containing a hardly decomposable substance (treatment raw water) to cause the hardly decomposable substance to be adsorbed on said adsorbent (adsorption treatment step), and
(C) separating a permeated liquid through a filter membrane to concentrate the adsorbent adsorbing said hardly decomposable substance (membrane filtering treatment step).
By providing the above constitution, hardly-decomposable-substance-containing water can be efficiently concentrated at a low cost without being limited by the properties and decomposition method of the hardly decomposable substance contained therein.

The concentration method of this invention preferably comprises the step of (A) separating a permeated liquid from the hardly-decomposable-substance-containing water through a reverse osmosis membrane (RO membrane) or a nano-filter membrane (NF membrane) to concentrate the hardly decomposable substance (membrane concentrating treatment step) before the step (B).
By providing the above constitution, a discharge amount to be treated can be decreased in a step prior to the addition of the adsorbent, so that the amount of the adsorbent to be added can be decreased and that the concentrate (water containing concentrated adsorbent adsorbing hardly decomposable substance) can be consequently decreased in volume. Further, equipment for practicing the (B) adsorption treatment step and the subsequent (C) membrane filtering treatment step can be reduced in size.

Further, in the concentration method of this invention, preferably, at least part of the hardly decomposable substance concentrated in the above step (A) is returned to the hardly-decomposable-substance-containing water (treatment raw water).
By providing the above constitution, the hardly decomposable substance can be concentrated as much as possible in the (A) membrane concentrating treatment step.

Details of the steps (A), (B), and (C) in the method according to the third aspect of this invention are as explained with regard to the first aspect of this invention, and explanations thereof are omitted. Further, any optional step explained with regard to the method according to the first aspect of this invention can be incorporated into the method according to the third aspect of this invention as required.

The method for treating hardly-decomposable-substance-containing water according to the fourth aspect of this invention comprises the step of irradiating the hardly decomposable substance concentrated by the above concentration method of this invention with light to decompose the hardly decomposable substance.
By providing the above constitution, the hardly decomposable substance is removed, so that there can be obtained treated water (discharge water) of which the hardly decomposable substance concentration is reduced to the emission standard value (10 pg-TEQ/L) or less, and further, the concentrate of the hardly decomposable substance is photodegraded, so that the concentrate can be rendered harmless.

The light for use in the photodegradation step in the method according to the fourth aspect of this invention is preferably ultraviolet light, and there can be also used light sources such as a low-pressure mercury lamp, a middle-pressure mercury lamp, a high-pressure mercury lamp, an excimer laser, natural light and a fluorescent lamp.
When titanium dioxide having a photocatalytic function is used as an adsorbent to be added in the step (B) in the method according to the third aspect of this invention, the hardly decomposable substance in the concentrate can be highly efficiently photodegraded in the photodegradation step in the method according to the fourth aspect of this invention.

### Examples

This invention will be explained further in detail with reference to Examples hereinafter, while this invention shall not be limited by these Examples.

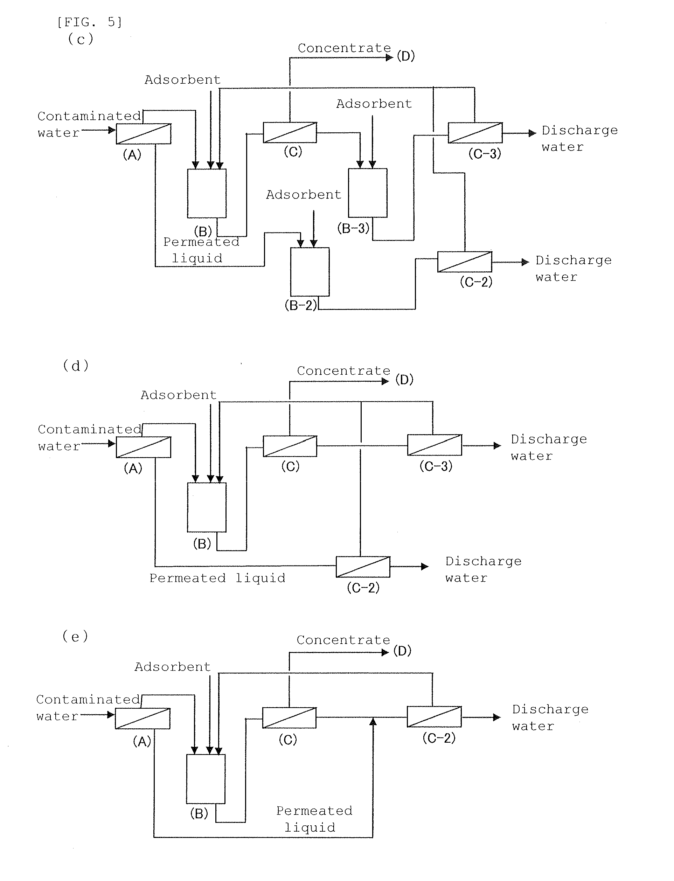

### Example 1 (see Fig. 6)

(B) Adsorption treatment step
   Raw water (dioxin concentration 6,500 pg-TEQ/L) was placed in an adsorption vessel having a residence time period set for 1 hour, and 1,000 ppm of diatomite was added as an adsorbent. The mixture was stirred for adsorption.

(C) Membrane filtering treatment step
   The above water to which the adsorbent had been added was subjected to membrane filtering treatment with an ultrafilter membrane (hollow fiber type, molecular cutoff 150,000), part of a liquid portion that had not passed through the ultrafilter membrane was added (returned) to the raw water and complete filtering was carried out at an operation pressure of 0.3 MPa. In this case, a permeated liquid had a dioxin concentration of 2.5 pg-TEQ/L, which was below the emission standard value (10 pg-TEQ/L). The ultrafilter membrane was backwashed with the permeated liquid in an amount 4 times the liquid that passed the ultrafilter membrane for 1 minute, and this liquid obtained by backwashing was taken as a concentrate (slurry).

(D) Chemical decomposition step
   To the concentrate obtained in the above step (C) was added sodium persulfate such that the mixture had a sodium persulfate concentration of 10 mass%, and the mixture was allowed to react at 70°C for 7 hours. A solid in a decomposition product after the reaction had a dioxin concentration of 1,000 pg-TEQ/g below the emission standard value (3,000 pg-TEQ/g).

### Example 2 (see Fig. 7)

(A) Membrane concentrating treatment step
   Raw water (dioxin concentration 6,500 pg-TEQ/L) was filtered with a reverse osmosis membrane (spiral type, sodium chloride rejection 95%). Part of a liquid (aqueous concentrate) that had not passed through the reverse osmosis membrane was added (returned) to the raw water, and the mixture was filtered at an operation pressure of 1 MPa or higher. 2/3 of the treatment amount was taken as a permeated liquid. The permeated liquid in this case had a dioxin concentration of 1 pg-TEQ/L below the emission standard value (10 pg-TEQ/L).

(B) Adsorption treatment step
   An aqueous concentrate in an amount that was 1/3 of the treatment amount, obtained in the above step (A), was placed in an adsorption vessel having a residence time period set for 1 hour, and 2,000 ppm of activated clay was added as an adsorbent. The mixture was stirred for adsorption.

(C) Membrane filtering treatment step
   The above aqueous concentrate to which the adsorbent had been added was subjected to membrane filtering treatment with an ultrafilter membrane (hollow fiber type, molecular cutoff 10,000). Part of a liquid portion (concentrate) that had not passed through the ultrafilter membrane was added (returned) to the aqueous concentrate to which the adsorbent had been added, which was obtained in the above step (B), and the mixture was filtered at an operation pressure of 0.3 MPa. The permeated liquid that passed through the ultrafilter membrane had a dioxin concentration of 1.8 pg-TEQ/L below the emission standard value (10 pg-TEQ/L). In addition, part of the concentrate obtained in the step (C) may be returned to the adsorption vessel in the step (B).
   The reverse osmosis membrane permeated liquid obtained in the above step (A) and the ultrafilter membrane permeated liquid obtained in the above step (C) were combined and taken as discharge water (dioxin concentration 1.3 pg-TEQ/L).
(G) Backwash step
   A solid portion (concentrate) adhering to the ultrafilter membrane in the above step (C) was backwashed with a permeated liquid in the membrane concentrating treatment step in an amount 4 times as large as the ultrafilter membrane permeated liquid for one minute, and this liquid obtained by backwashing was taken as a concentrate.

(D) Chemical decomposition step
   To the concentrate obtained in the above step (G) was added sodium persulfate such that the mixture had a sodium persulfate concentration of 10 mass%, and the mixture was allowed to react at 70°C for 7 hours in the same manner as in Example 1. A solid in a decomposition product after the reaction had a dioxin concentration of 950 pg-TEQ/g below the emission standard value (3,000 pg-TEQ/g).

### Example 3 (see Fig. 8)

(E) Chlorine neutralization step and (A) membrane concentrating treatment step
   To raw water (dioxin concentration 6,500 pg-TEQ/L, free chlorine concentration 50 mg/L) was added sodium bisulfite such that the amount of the sodium bisulfite was 150 mg/L which was 3 times the amount of the free chlorine, and the mixture was stirred. The mixture was filtered with a reverse osmosis membrane (spiral type, sodium chloride rejection 95%). Part of a liquid portion (aqueous concentrate) that had not passed through the reverse osmosis membrane was added (returned) to the raw water to which sodium bisulfite had been added, and the mixture was filtered at an operation pressure of 1 MPa or higher. 2/3 of the treatment amount was taken as a permeated liquid.
   The permeated liquid in this case had a dioxin concentration of 1.1 pg-TEQ/L below the emission standard value (10 pg-TEQ/L).

(B) Adsorption treatment step
   The aqueous concentrate of which the amount was 1/3 of the treatment amount, obtained in the above step (A), was placed in an adsorption vessel having a residence time period set for 1 hour in the same manner as in Example 1, 2,000 ppm of activated clay was added as an adsorbent, and the mixture was stirred for adsorption.

(C) Membrane filtering treatment step
   The aqueous concentrate to which the adsorbent had been added was ultrafiltered with an ultrafilter membrane (hollow fiber type, 10,000 cutoff). Part of a liquid portion (concentrate) that had not passed through the ultrafilter membrane was added (returned) to the aqueous concentrate to which the adsorbent had been added, and the mixture was filtered at an operation pressure of 0.1 MPa. A permeated liquid that passed through the ultrafilter membrane had a dioxin concentration of 1.7 pg-TEQ/L below the emission standard value (10 pg-TEQ/L).
   The reverse osmosis membrane permeated liquid obtained in the above step (A) and the ultrafilter membrane permeated liquid obtained in the above step (C) were combined and taken as discharge water (dioxin concentration 1.3 pg-TEQ/L).

(G) Backwash step
   A solid portion (concentrate) adhering to the ultrafilter membrane in the above step (C) was backwashed with the permeated liquid in the membrane concentrating treatment step in an amount 4 times as large as the amount of the ultrafilter membrane permeated liquid for one minute, and this liquid obtained by backwashing was taken as a concentrate.

(D) Chemical decomposition step
   To the concentrate obtained in the above step (G) was added sodium persulfate such that the mixture had a sodium persulfate concentration of 10 mass%, and the mixture was allowed to react at 70°C for 7 hours in the same manner as in Example 1. A solid in the decomposition product after the reaction had a dioxin concentration of 970 pg-TEQ/g below the emission standard value (3,000 pg-TEQ/g).
   In the above manner, it has been confirmed that the treatment for neutralizing free chlorine, which causes membranes to be deteriorated, with sodium bisulfite does not have any adverse effect on the chemical decomposition reaction.

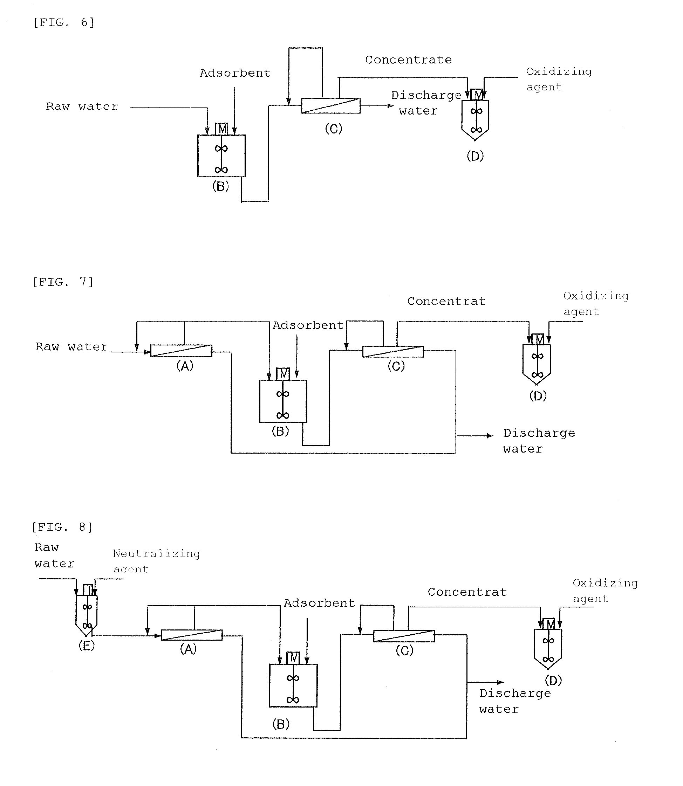

### Example 4 (see Fig. 9)

(E) Chlorine neutralization step and (A) membrane concentrating treatment step To raw water (dioxin concentration 6,500 pg-TEQ/L, free chlorine concentration 50 mg/L) was added sodium bisulfite such that the amount of the sodium bisulfite was 150 mg/L which was 3 times the amount of the free chlorine, and the mixture was stirred. The mixture was filtered with a reverse osmosis membrane (spiral type, sodium chloride rejection 95%). Part of a liquid portion (aqueous concentrate) that had not passed through the reverse osmosis membrane was added (returned) to the raw water to which sodium bisulfite had been added, and the mixture was filtered at an operation pressure of 1.5 MPa or higher.. 2/3 of the treatment amount was taken as a permeated liquid. In this case, the permeated liquid had a dioxin concentration of 1.1 pg-TEQ/L, which was below the emission standard value (10 pg-TEQ/L). The aqueous concentrate that had an amount 1/3 as large as the treatment amount had a dioxin concentration of 20,000 pg-TEQ/L.

(B) Adsorption treatment step and (F) photodegradation step
   The aqueous concentrate obtained in the above step (A) was placed in an adsorption vessel having a residence time period set for 1 hour, 15 ppm of titanium dioxide was added as an adsorbent, and the mixture was irradiated with ultraviolet light (wavelength 254 nm) while it was stirred for adsorption. The aqueous concentrate after the photodegradation had a dioxin concentration of 6,000 pg-TEQ/L.

(C) Membrane filtering treatment step
   The aqueous concentrate to which the adsorbent had been added and irradiated with ultraviolet light was subjected to membrane filtering treatment with an ultrafilter membrane (hollow fiber type, 10,000 cutoff). A liquid portion (concentrate) that had not passed through the ultrafilter membrane was added (returned) to the aqueous concentrate to which the adsorbent had been added and irradiated with ultraviolet light, and the mixture was filtered at an operation pressure of 0.3 MPa. A permeated liquid that passed through the ultrafilter membrane had a dioxin concentration of 1.2 pg-TEQ/L below the emission standard value (10 pg-TEQ/L).

(G) Backwash step A solid portion (concentrate) adhering to the ultrafilter membrane in the above step (C) was backwashed with a permeated liquid in the membrane concentrating treatment step in an amount 4 times as large as the amount of the ultrafilter membrane permeated liquid for 1 minutes, and this liquid obtained by backwashing was taken as a concentrate (slurry).
(D) Chemical decomposition step To the concentrate obtained in the above step (G) was added sodium persulfate such that the mixture had a sodium persulfate concentration of 10 mass%, and the mixture was allowed to react at 70°C for 7 hours in the same manner as in Example 1. A solid in a decomposition product after the reaction had a dioxin concentration of 900 pg-TEQ/g below the emission standard value (3,000 pg-TEQ/g).
   In the above manner, it has been found that a concentrate that does not pass through a reverse osmosis membrane can be decomposed by adding titanium oxide to the concentrate and irradiating it with ultraviolet light.

### Example 5 (see Fig. 10)

Steps up to and including the step (G) in Example 4 were carried out in the same manner as in Example 4, and the procedures were followed by the following step.

### (F-2) Second photodegradation step

A concentrate (liquid obtained by backwashing: dioxin concentration 15,000 pg-TEQ/L) obtained in the above step (G) was irradiated with ultraviolet light (wavelength 254 nm) for 24 hours. After the irradiation with ultraviolet light, the concentrate had a dioxin concentration of 750 pg-TEQ/L.

(D) Chemical decomposition step
   To the concentrate (slurry) obtained in the above step (G) was added sodium persulfate such that the mixture had a sodium persulfate concentration of 10 mass%, and the mixture was allowed to react at 70°C for 7 hours in the same manner as in Example 1. A solid in a decomposition product after the reaction had a dioxin concentration of 850 pg-TEQ/g below the emission standard value (3,000 pg-TEQ/g).
   In this manner, it has been found that a concentrate that does not pass through an ultrafilter membrane can be decomposed by irradiating it with ultraviolet light.

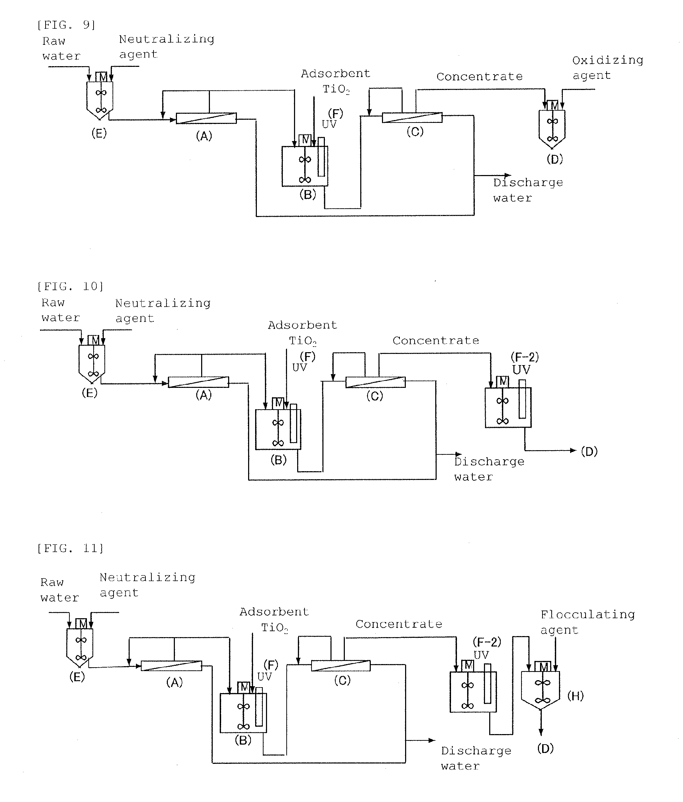

### Example 6 (see Fig. 11)

(H) Flocculation-separation step
   To the concentrate (slurry) obtained in the step (G) of Example 5 was added 100 ppm of polyaluminum chloride as an inorganic flocculating agent, and the mixture was stirred. After 12 hours, a settled substance was withdrawn as a slurry concentrate having a concentration of 10 mass%.

(D) Chemical decomposition step Sodium persulfate was added to the slurry concentrate obtained in the above step (H) such that the mixture had a sodium persulfate concentration of 20 mass%, and the mixture was allowed to react at 90°C for 24 hours. After the reaction, the reaction mixture had a dioxin concentration of 550 pg-TEQ/g below the emission standard value (3,000 pg-TEQ/g).

### Example 7 (Example of multiple filtering) (see Fig. 12)

The (B) adsorption treatment step, the (C) membrane filtering treatment step and the (D) chemical decomposition step in Example 1 were carried out in the same manner as in Example 1, and a permeated liquid obtained in the step (C) was further treated as follows.

### (C-2) Second membrane filtering treatment step

A permeated liquid obtained in the (C) membrane filtering step from raw water in Example 1 (dioxin concentration 6,500 pg-TEQ/L) was placed in an adsorption vessel having a residence time period set for 1 hour, 100 ppm of diatomite was added as an adsorbent, and the mixture was stirred for adsorption. The permeated liquid to which the adsorbent had been added was membrane-filtered with an ultrafilter membrane (hollow fiber type, molecular cutoff 150,000) ((C) membrane filtering treatment step). Part of a liquid portion (concentrate) that had not passed through the ultrafilter membrane was added (returned) to the permeated liquid that passed through the ultrafilter membrane in the step (C-2) and to which the adsorbent had been added, and the mixture was filtered at an operation pressure of 0.2 MPa. The resultant permeated liquid had a dioxin concentration of 1 pg-TEQ/L or less, which was the environmental standard value (1 pg-TEQ/L) or less.

The concentrate obtained by the ultrafilter membrane in the step (C-2) was returned to the adsorption vessel positioned before the (C) membrane filtering treatment step in Example 1, while there was no change in dioxin concentrations in treated water (discharge water) and a chemical decomposition product.

### Example 8 (Example of multiple filtering) (see Fig. 13)

The (B) adsorption treatment step, the (C) membrane filtering treatment step and the (D) chemical decomposition step in Example 1 were carried out in the same manner as in Example 1, and a permeated liquid obtained in the step (C) was further treated as follows.

### (C-2) Second membrane filtering treatment step

A permeated liquid obtained in the (C) membrane filtering treatment step from raw water (dioxin concentration 6,500 pg-TEQ/L) in Example 1 was filtered with an ultrafilter membrane (hollow fiber type, molecular cutoff 3,000). A liquid portion (concentrate) that had not passed through the ultrafilter membrane was added (returned) to the permeated liquid obtained in (C-1) membrane filtering treatment step, and the mixture was filtered at an operation pressure of 0.2 MPa. In this case, a permeated liquid had a dioxin concentration of 1 pg-TEQ/L or less, which was the environmental standard value (1 pg-TEQ/L) or less.
The concentrate obtained by the ultrafilter membrane in the step (C-2) was returned to the adsorption vessel positioned before the (C) membrane filtering treatment step in Example 1, while there was no change in dioxin concentrations in treated water (discharge water) and a chemical decomposition product.

### Example 9 (Example of multiple filtering) (see Fig. 13)

The (B) adsorption treatment step, the (C) membrane filtering treatment step and the (D) chemical decomposition step in Example 1 were carried out in the same manner as in Example 1, and a permeated liquid obtained in the step (C) was further treated as follows.

### (C-2) Second membrane filtering treatment step

A permeated liquid obtained in the (C) membrane filtering treatment step in Example 1 was filtered with a nano-filter membrane (hollow fiber type, sodium chloride rejection 30%). Part of a liquid portion (concentrate) that had not passed through the nano-filter membrane was added (returned) to the permeated liquid obtained in the (C) membrane filtering treatment step, and the mixture was filtered at an operation pressure of 0.5 MPa. In this case, a permeated liquid had a dioxin concentration of 1 pg-TEQ/L or less, which was the environmental standard value (1 pg-TEQ/L) or less.
The concentrate obtained by the nano-filter membrane in the step (C-2) was returned to the adsorption vessel positioned before the (C) membrane filtering treatment step in Example 1, while there was no change in dioxin concentrations in treated water (discharge water) and a chemical decomposition product.

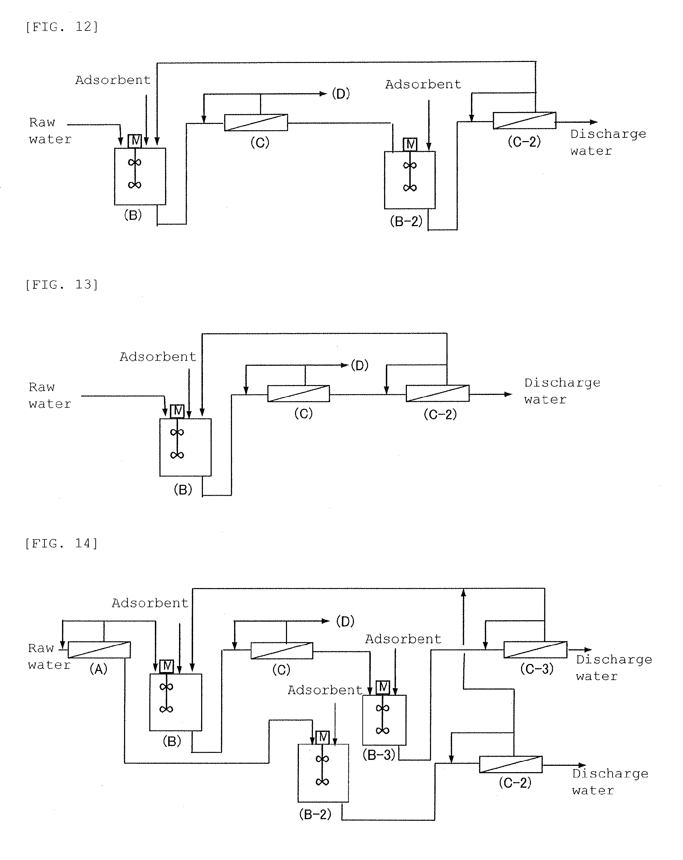

### Example 10 (Example of multiple filtering) (see Fig. 14)

The (A) membrane concentrating treatment step, the (B) adsorption treatment step, the (C) membrane filtering treatment step and the (D) chemical decomposition step in Example 2 were carried out in the same manner as in Example 2, and permeated liquids obtained in the step (A) and the step (C) were further treated as follows.

(1) (B-2) Second adsorption treatment step and (C-2) second membrane filtering step for permeated liquid obtained in step (A)
   A permeated liquid obtained in the (A) membrane concentrating treatment step in Example 2 was placed in an adsorption vessel having a residence time period set for 1 hour, 100 ppm of activated clay was added as an adsorbent, and the mixture was stirred for adsorption. The permeated liquid to which the adsorbent had been added was filtered with an ultrafilter membrane (hollow fiber type, molecular cutoff 150,000). Part of a liquid portion (concentrate) that had not passed through the ultrafilter membrane was added (returned) to the permeated liquid from the step (B-2) to which the adsorbent had been added, and the mixture was filtered at an operation pressure of 0.2 MPa. The resultant permeated liquid had a dioxin concentration of 1 pg-TEQ/L or less, which was the environmental standard value (1 pg-TEQ/L) or less.

(2) (B-3) Third adsorption treatment step and (C-3) third membrane filtering treatment step for permeated liquid obtained in step (C)
   A permeated liquid obtained in the (C) membrane filtering treatment step in Example 2 was placed in an adsorption vessel having a residence time period set for 1 hour, 1,000 ppm of activated clay was added as an adsorbent, and the mixture was stirred for adsorption. The permeated liquid to which the adsorbent had been added was filtered with an ultrafilter membrane (hollow fiber type, molecular cutoff 150,000). Part of a liquid portion (concentrate) that had not passed through the ultrafilter membrane was added (returned) to the permeated liquid from the step (B-3) to which the adsorbent had been added, and the mixture was filtered at an operation pressure of 0.3 MPa. The resultant permeated liquid had a dioxin concentration of 1 pg-TEQ/L or less, which was the environmental standard value (1 pg-TEQ/L) or less.
   Each of the concentrates was returned to the adsorption vessels in the (B) adsorption treatment step, while there was no change in dioxin concentrations in treated water (discharge water) and a chemical decomposition product in each case.

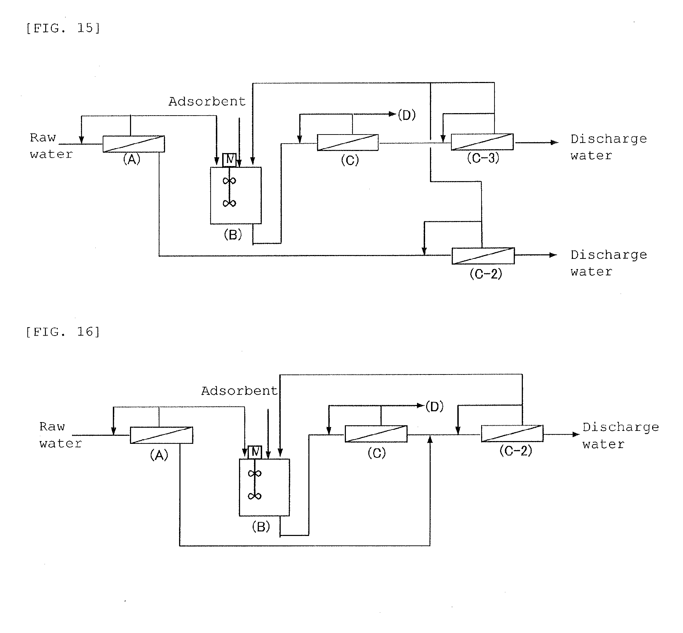

### Example 11 (Example of Multiple filtering) (see Fig. 15)

The (A) membrane concentrating treatment step, the (B) adsorption treatment step, the (C) membrane filtering treatment step and the (D) chemical decomposition step in Example 2 were carried out in the same manner as in Example 2, and permeated liquids obtained in the step (A) and the step (C) were further treated as follows.

(1) (C-2) Second membrane filtering treatment step for permeated liquid obtained in step (A)
   A permeated liquid obtained in the step (A) in Example 2 was filtered with a reverse osmosis membrane (spiral type, sodium chloride rejection 95%). Part of a liquid portion (concentrate) that had not passed through the reverse osmosis membrane was added (returned) to the permeated liquid from the step (A), followed by an operation at 1 MPa or higher. A permeated liquid had a dioxin concentration of 1 pg-TEQ/L or less, which was the environmental standard value (1 pg-TEQ/L) or less.

(2) (C-3) Third membrane filtering treatment step for permeated liquid obtained in step (C)
   A permeated liquid obtained in the step (C) in Example 2 was filtered with a nano-filter membrane (hollow fiber type, sodium chloride rejection 30%). Part of a liquid portion (concentrate) that had not passed through the nano-filter membrane was added (returned) to the permeated liquid obtained in the step (C), and the mixture was filtered at an operation pressure of 0.6 MPa. In this case, a permeated liquid had a dioxin concentration of 1 pg-TEQ/L or less, which was the environmental standard value (1 pg-TEQ/L) or less.
   The concentrate obtained in the above step (C-2) and the concentrate obtained in the above step (C-3) were returned to the adsorption vessels in the (B) adsorption treatment step, while there was no change in dioxin concentrations in treated water (discharge water) and a chemical decomposition product in each case.

### Example 12 (Example of Multiple filtering) (see Fig. 16)

The (A) membrane concentrating treatment step, the (B) adsorption treatment step, the (C) membrane filtering treatment step and the (D) chemical decomposition step in Example 2 were carried out in the same manner as in Example 2, and permeated liquids obtained in the step (A) and the step (C) were further treated as follows.

(C-2) Second membrane filtering treatment step for permeated liquid obtained in step (A) and permeated liquid obtained in step (C)
   Discharge water (dioxin concentration 1.2 pg-TEQ/L) prepared by combining a permeated liquid obtained in the step (A) in Example 2 and a permeated liquid obtained in the step (C) in Example 2 was filtered with a nano-filter membrane (hollow fiber type, sodium chloride rejection 30%). Part of a liquid portion (concentrate) that had not passed through the nano-filter membrane was added (returned) to discharge water prepared by combining a permeated liquid obtained in the step (A) and a permeated liquid obtained in the step (C), and the mixture was filtered at an operation pressure of 0.5 MPa. In this case, a permeated liquid had a dioxin concentration of 1 pg-TEQ/L or less, which was the environmental standard value (1 pg-TEQ/L) or less.
   The concentrate obtained in the step (C-2) was returned to the adsorption vessel in the step (B), while there was no change in dioxin concentrations in treated water (discharge water) and a chemical decomposition product.

### Example 13

Contaminated water containing dioxins was treated for rendering it harmless with a treatment apparatus shown in Fig. 3.
(A) Membrane concentrating treatment (including (E) chlorine neutralization step and (I) pre-filtering step)
   In a reducing substance introduction section 10, sodium bisulfite was added to contaminated water containing dioxins (concentration of dioxins 6,300 pg-TEQ/L, free chlorine concentration 50 mg/L) such that the mixture had a sodium bisulfite content of 150 mg/L, which was 3 times as large as the amount of the free chlorine while the mixture was stirred.

In a reverse osmosis treatment section 20, the contaminated water (electric conductivity 3,000 µS/cm) to which the sodium bisulfite had been added was caused to pass through a pre-filter to remove a large suspended substance, and then the contaminated water was membrane-treated with a reverse osmosis membrane having a salt rejection of at least 95%. In the above reverse osmosis treatment, part of a liquid portion that had not passed through the reverse osmosis membrane was combined with contaminated water that passed the pre-filter, and the mixture was supplied again to the reverse osmosis membrane. In this operation, the electric conductivity of the above liquid portion was adjusted to 9,000 µS/cm or less, which was 3 times as that of the contaminated water or less. The concentration of dioxins in a permeated liquid was 1.9 pg-TEQ/L below the emission standard value (10 pg-TEQ/L).

(B) Adsorption treatment step and (F-1) first photodegradation step
   In an adsorbent adding-ultraviolet irradiation section 30, then, 10 ppm of titanium dioxide that could work as a photocatalyst was added to the liquid portion (concentration of dioxins 3,000 pg-TEQ/L) that had not passed through the reverse osmosis membrane, and they were mixed with stirring and then irradiated with ultraviolet light having a wavelength of 254 nm to photodegrade dioxins. In this case, the concentration of dioxins in the liquid portion was 1,200 pg-TEQ/L, and it is seen that 60% of them were photodegraded.

(C) Membrane filtering treatment step (including (G) backwash step)
   In a membrane filtering treatment section 40, the liquid portion after the above photodegradation was caused to pass an ultrafilter membrane having a molecular cutoff of 150,000 to carry out membrane filtering treatment. In this membrane filtering treatment with the ultrafilter membrane, and the ultrafilter membrane was washed with backwash water prepared by adding 3 ppm of hypochlorous acid to the permeated liquid obtained by the above (A) reverse osmosis membrane treatment in an amount 4 times as large as the amount of an ultrafilter membrane permeated liquid once every 60 minutes. The concentration of dioxins in the permeated liquid that had passed through the ultrafilter membrane was found to be 0.65 pg-TEQ/L below the emission standard value (10 pg-TEQ/L).
   The reverse osmosis membrane permeated liquid and the ultrafilter membrane permeated liquid were combined, and the combined liquids were taken as discharge water (concentration of dioxins 1.5 pg-TEQ/L).

(F-2) Second photodegradation step
   A concentrate (liquid obtained by backwashing) obtained by the membrane filtering treatment was transferred to an ultraviolet irradiation section 50, 100 ppm of hydrogen peroxide as a photodegradation promoter was added, and the mixture was irradiated with ultraviolet light having a wavelength of 254 nm to photodegrade dioxins again. In this case, the concentration of dioxins in the liquid portion was 120 pg-TEQ/L, and it is seen that 90% of them were photodegraded.

(H) Flocculation separation step
   In a flocculating agent adding section 60, 100 ppm of polyaluminum chloride was added to a concentrate after the photodegradation, and the mixture was moderately stirred to fully flocculate the adsorbent adsorbing dioxins. Then, while the mixture was stirred at a rotation rate of 1 rpm to prevent a flocculated substance from being solidified in a bottom, the flocculated substance was allowed to settle for 18 hours. A clean supernatant was returned to the adsorbent adding-ultraviolet irradiation section 30.

(D) Chemical decomposition step
   In a chemical decomposition treatment section 80, 4 g (100 times larger in molar amount than the dioxins) of powdery sodium persulfate was added to the settled substance, and water was added such that the mixture had a total volume of 40 mL. Then, the mixture was heated at 70°C for 24 hours with stirring, to carry out chemical decomposition treatment. After completion of the chemical decomposition, a decomposed substance was allowed to stand for solid-liquid separation.
   The concentration of dioxins in a supernatant was found to be 32 pg-TEQ/L. The supernatant was neutralized with a 20% sodium hydroxide aqueous solution and returned to the adsorbent adding-ultraviolet irradiation section 30.
   It was found that the amount of dioxins in a concentrate (solid) after the chemical decomposition was 270 pg-TEQ/g below the emission stand value (3,000 pg-TEQ/g) of industrial waste.

### Industrial Utility

The method of this invention can be widely used as a treatment method that can render harmless hardly decomposable organic compounds such as dioxins and PCBs, contained in industrial discharge water, soil extract water, discharge water occurring in washing in incinerator demolish work and their concentrates and that can stably bring the concentrations of the hardly decomposable substances in discharge water into values below emission standard values.

## Claims

1. A method for treating hardly-decomposable-substance-containing water, which comprises the steps of
(B) adding an adsorbent to water containing a hardly decomposable substance (treatment raw water) to cause the hardly decomposable substance to be adsorbed on said adsorbent (adsorption treatment step),
(C) separating a permeated liquid through a filter membrane to concentrate the adsorbent adsorbing said hardly decomposable substance (membrane filtering treatment step), and
(D) chemically decomposing the hardly decomposable substance adsorbed on said concentrated adsorbent with a peroxide without any operation of desorption from said adsorbent (chemical decomposition step).

2. The method for treating hardly-decomposable-substance-containing water as recited claim 1, wherein the step (D) uses said peroxide in an amount of at least 100 times larger in molar relative to that of said hardly decomposable substance.

3. The method for treating hardly-decomposable-substance-containing water as recited in claim 1 or 2, which further comprises the step of
(A) separating a permeated liquid from the water containing the hardly decomposable substance through a reverse osmosis membrane (RO membrane) or a nano-filter membrane (NF membrane), to concentrate the hardly decomposable substance (membrane concentrating treatment step).

4. The method for treating hardly-decomposable-substance-containing water as recited in claim 1, which further comprises the step of
(E) neutralizing chlorine in the water containing the hardly decomposable substance (chlorine neutralization step).

5. The method for treating hardly-decomposable-substance-containing water as recited in claim 1, which further comprises the step of
(F) carrying out irradiation with ultraviolet light to decompose the hardly decomposable substance (photodegradation step).

6. The method for treating hardly-decomposable-substance-containing water as recited in claim 1, which comprises the step of
(G) backwashing the filter membrane used in said step (C), to free the adsorbent adsorbing the hardly decomposable substance from said filter membrane (backwash step).

7. The method for treating hardly-decomposable-substance-containing water as recited in claim 1, which further comprises the step of
(H) adding a flocculating agent to water containing the adsorbent adsorbing the hardly decomposable substance, to flocculate and separate the adsorbent adsorbing the hardly decomposable substance (flocculation separation step).

8. The method for treating hardly-decomposable-substance-containing water as recited in claim 1, wherein the adsorbent to be added in said step (B) is one inorganic adsorbent, or two or more inorganic adsorbents, which is or are selected from the group consisting of titanium dioxide, zeolite, acid clay, activated clay, diatomite, metal oxide, metal powder, activated carbon and carbon black.

9. The method for treating hardly-decomposable-substance-containing water as recited in claim 8, wherein the adsorbent to be added in said step (B) is titanium dioxide.

10. The method for treating hardly-decomposable-substance-containing water as recited in claim 1, wherein the filter membrane for use in said step (C) is selected from the group consisting of an ultrafilter membrane (UF membrane), a nano-filter membrane (NF membrane), a microfiltration membrane (MF membrane) and a reverse osmosis membrane (RO membrane).

11. The method for treating hardly-decomposable-substance-containing water as recited in claim 1, wherein the peroxide for use in said step (D) is a persulfate.

12. A method for treating hardly-decomposable-substance-containing water as recited in claim 1, wherein at least part of the hardly decomposable substance concentrated in said step (A) and/or the adsorbent adsorbing the hardly decomposable substance concentrated in said step (C) is returned to the water containing the hardly decomposable substance (treatment raw water) or a step upstream of the step (A) or the step (C).

13. An apparatus for treating hardly-decomposable-substance-containing water, which comprises
an adsorbent adding section for adding an adsorbent to water containing a hardly decomposable substance (treatment raw water),
a membrane filtering treatment section for separating a permeated liquid through a filter membrane to concentrate the adsorbent adsorbing said hardly decomposable substance, and
a chemical decomposition treatment section for oxidation-decomposing said hardly decomposable substance adsorbed on said adsorbent with a peroxide.

14. An apparatus for treating hardly-decomposable-substance-containing water, comprising
a reducing substance introduction section for introducing a reducing substance to water containing a hardly decomposable substance (treatment raw water) to neutralize chlorine in said water,
a membrane concentrating treatment section for separating a permeated liquid from the water containing a hardly decomposable substance through a reverse osmosis membrane (RO membrane) or a nano-filter membrane (NF membrane) to concentrate the hardly decomposable substance,
an adsorbent adding section for adding an adsorbent to said hardly decomposable substance concentrated, to cause the adsorbent to adsorb the hardly decomposable substance,
a membrane filtering treatment section for separating a permeated liquid through a filter membrane to concentrate the adsorbent adsorbing said hardly decomposable substance,
a flocculating agent adding section for adding a flocculating agent to water containing the adsorbent adsorbing said concentrated hardly decomposable substance, to flocculate the adsorbent adsorbing said hardly decomposable substance,
a solid-liquid separating section for separating the adsorbent adsorbing the hardly decomposable substance and being flocculated by said flocculating agent, and
a chemical decomposition treatment section for oxidation-decomposing the hardly decomposable substance adsorbed on said adsorbent separated, with a peroxide.

15. A method for concentrating a hardly decomposable substance in hardly-decomposable-substance-containing water, which comprises the steps of
(B) adding an adsorbent to water containing a hardly decomposable substance (treatment raw water) to cause the hardly decomposable substance to be adsorbed on said adsorbent (adsorption treatment step), and
(C) separating a permeated liquid through a filter membrane to concentrate the adsorbent adsorbing said hardly decomposable substance (membrane filtering treatment step).

16. The method for concentrating a hardly decomposable substance in hardly-decomposable-substance-containing water as recited in claim 15, which further comprises the step of
(A) separating a permeated liquid from the water containing a hardly decomposable substance through a reverse osmosis membrane (RO membrane) or a nano-filter membrane (NF membrane), to concentrate the hardly decomposable substance (membrane concentrating treatment step).

17. The method for concentrating a hardly decomposable substance in hardly-decomposable-substance-containing water as recited in claim 16, wherein at least part of the hardly decomposable substance concentrated in said step (A) is returned to said water containing a hardly decomposable substance (treatment raw water).

18. A method for treating water containing a hardly decomposable substance, which comprises irradiating a hardly decomposable substance concentrated by the method for concentrating a hardly decomposable substance in hardly-decomposable-substance-containing water as recited in any one of claim 15 to 17, with light to decompose the hardly decomposable substance.
